# EUROPEAN PATENT APPLICATION

(11) **EP 4 357 733 A1**
(43) Date of publication of application: **24.04.2024**
(21) Application number: 22836885.8
(22) Date of filing: 05.07.2022
(51) Int. Cl.: G01C 21/26, G08G 1/137

(54) **MAP INFORMATION GENERATION METHOD AND APPARATUS, MAP INFORMATION USAGE METHOD AND APPARATUS, AND MAP, STORAGE MEDIUM AND PROGRAM**

(30) Priority: 09.07.2021 CN 202110780372
(71) Applicant: Huawei Technologies Co., Ltd., Shenzhen, Guangdong 518129 (CN)
(72) Inventor: FEI, Wenkai, Shenzhen, Guangdong 518129 (CN); YANG, Miao, Shenzhen, Guangdong 518129 (CN); LIU, Jianqin, Shenzhen, Guangdong 518129 (CN); WU, Yong, Shenzhen, Guangdong 518129 (CN); LIU, Shuo, Shenzhen, Guangdong 518129 (CN)
(74) Representative: Maiwald GmbH
(86) International application number: PCT/CN2022/103795
(87) International publication number: WO 2023/280134

(57) **Abstract**

Embodiments of this application provide a map information generation method and apparatus, a map information use method and apparatus, a map, a storage medium, and a program. The method includes: generating first map information, where the first map information includes information about a first reference object set, and the information about the first reference object set indicates a first identifier, in a geographic area, of each reference object in at least one reference object included in the first reference object set, and indicates a first position of each reference object in the at least one reference object. The first map information is generated, and the first map information indicates related information of each reference object in the first reference object set, to implement a manner of expressing the related information of the reference object more abundantly, so that maps provided by different map vendors may use reference objects in the first map information to perform position expression on an element or an event. This ensures that position information expressed by maps provided by the different map vendors is universal.

## Description

This application claims priority to Chinese Patent Application No. 202110780372.0, filed with the China National Intellectual Property Administration on July 9, 2021 and entitled "MAP INFORMATION GENERATION METHOD AND APPARATUS, MAP INFORMATION USE METHOD AND APPARATUS, MAP, STORAGE MEDIUM, AND PROGRAM", which is incorporated herein by reference in its entirety.

### TECHNICAL FIELD

This application relates to the field of intelligent transportation and the field of intelligent vehicle technologies, and in particular, to a map information generation method and apparatus, a map information use method and apparatus, a map, a storage medium, and a program.

### BACKGROUND

Currently, in an intelligent transportation communication system, a vehicle may obtain road condition information or receive dynamic event information in a timely manner through vehicle to vehicle (vehicle to vehicle, V2V) communication, vehicle to infrastructure (vehicle to infrastructure, V2I) communication, vehicle to pedestrian (vehicle to pedestrian, V2P) communication, and vehicle to network (vehicle to network, V2N) communication. These communication modes may be collectively referred to as V2X communication (where X represents anything).

In some scenarios, position expression needs to be performed on an element or an event. In some solutions, position expression may be performed by using relative coordinates. Specifically, a map vendor determines some reference points based on a cartographic rule and a number of a map element, and when expressing position information of an element or an event, uses a relative position of the element or the event relative to the reference point for expression.

However, because different map vendors use different cartographic rules and map element numbering methods, different map vendors perform relative position expression based on different reference points. As a result, position information expressed by maps provided by the

This application provides a map information generation method and apparatus, a map information use method and apparatus, a map, a storage medium, and a program, to resolve a problem that position information expressed by maps provided by different map vendors is not universal.

According to a first aspect, this application provides a map information generation method, including: generating first map information, where the first map information includes information about a first reference object set, and the information about the first reference object set indicates a first identifier, in a geographic area, of each reference object in a first at least one reference object included in the first reference object set, and indicates a first position of each reference object in the first at least one reference object; and sending the first map information.

In the foregoing process, the first map information is generated, and the first map information indicates a position and an identifier of each reference object in the first reference object set, to provide a universal position reference manner for different map vendors, so that a plurality of devices that use different maps may obtain a reference object used for position reference from reference object information indicated by the first map information, and indicate the reference object used for position reference to another device that performs position information interaction. This ensures that position information can be transferred between the plurality of devices that use different maps.

Further, when a first electronic device needs to transfer position information of a target object to a second electronic device, the first electronic device may perform relative position expression on the target object based on the reference object indicated by the first map information, to obtain relative position information of the target object, and send the relative position information to the second electronic device. In this way, because the relative position information is transferred between the first electronic device and the second electronic device, deflection processing does not need to be performed, so that a deflection error is avoided, and locating precision of the second electronic device is ensured.

In a possible implementation, the reference object includes a reference point and/or a reference line. The reference line includes one or more of the following: a straight line, a dashed line, and a broken line. For example, when the reference object is the reference point, the reference object may be a point that may be determined based on a map element, for example, an end point of a stop line, an end point of a lane center line, an end point of a road center line, an end point of a lane line, an end point of a road edge line, a crossover point of a lane line and a stop line, a crossover point of a lane line and a lane line, a crossover point of a road edge line and a road edge line, a lane line change point, a center point of an external frame of a traffic marking, a vertex of an external polygon of a traffic marking, a ground projection point corresponding to a center point of an external frame of a traffic sign, a ground projection point corresponding to a center point of an external frame of a traffic signal light frame, or the like. When the reference object is the reference line, the reference object may be a map element, or may be a line that may be determined based on the map element. For example, the reference line may be a stop line, a lane line, a lane center line, a road center line, a road edge line, or the like.

In the foregoing process, the reference object is used to provide a reference for position expression of an element or an event on a map. Specifically, position information of the element or the event on the map may be expressed based on a relative position of the element or the event on the map relative to the reference object. A map element based on which the reference point is selected is a physical element (like a lane line, a stop line, a traffic marking, a traffic sign, or a traffic signal light frame) that actually exists on a road, or a virtual element (like a lane center line or a road side line extension line) that may be accurately located based on a physical element that actually exists on a road. Therefore, reference points selected by different map vendors are universal, and further, first map information generated by using the universal reference points is universal. In this way, when relative position expression is performed based on the first map information, universality of expressed position information is ensured, and therefore, the first map information may be applied to a scenario in which different electronic devices need to transfer position information.

In a possible implementation, a first position of each reference object may be expressed by using absolute coordinates. Alternatively, a first position of each reference object may be expressed by using relative coordinates. Alternatively, first positions of some reference objects are expressed by using absolute coordinates, and first positions of other reference objects are expressed by using relative coordinates.

In a possible implementation, when the reference object is a map element, a first position may alternatively be expressed by indicating the map element.

In a possible implementation, the information about the first reference object set further indicates at least one of the following content: current version information, previous version information, an update status of each reference object, a type of each reference object, a priority of each reference object, position precision of each reference object, confidence of each reference object, a map element associated with each reference object, and an identifier of the geographic area.

In this way, the information about the first reference object set describes each reference object more abundantly, so that the reference object can be located more accurately.

In a possible implementation, the generating first map information includes: obtaining second map information, where the second map information includes information about a second reference object set, and the information about the second reference object set indicates a second identifier, in the geographic area, of each reference object in a second at least one reference object included in the second reference object set, and indicates a second position of each reference object in the second at least one reference object; generating the information about the first reference object set based on the information about the second reference object set; and generating the first map information based on the information about the first reference object set.

In a possible implementation, a second position of each reference object may be expressed by using absolute coordinates. Alternatively, a second position of each reference object may be expressed by using relative coordinates. Alternatively, second positions of some reference objects are expressed by using absolute coordinates, and second positions of other reference objects are expressed by using relative coordinates.

In a possible implementation, when the reference object is a map element, a second position may alternatively be expressed by indicating the map element.

In the foregoing implementation, the first map information may be generated based on the second map information, so that the first map information having corresponding reference point density may be generated based on a relative position expression requirement in an actual application scenario. This resolves a problem in the conventional technology that reference point density is uneven due to a road interruption rule.

In a possible implementation, the first map information further includes association indication information, and the association indication information indicates that the first map information is generated based on the second map information.

In this way, when the second map information is updated, the first map information may be updated based on the association indication information.

In a possible implementation, the generating the information about the first reference object set based on the information about the second reference object set includes: selecting some reference objects from the second at least one reference object as the first at least one reference object. For example, density thinning processing may be performed on the second at least one reference object based on the relative position expression requirement in the actual application scenario, to obtain the first at least one reference object.

In this way, a quantity of reference objects is reduced when position expression precision in the actual application scenario is met, to avoid a problem that a reference object is frequently changed because of a large quantity of reference objects.

In a possible implementation, the generating the information about the first reference object set based on the information about the second reference object set includes: performing coordinate calculation on at least some reference objects in the second at least one reference object based on a preset rule; and determining the first at least one reference object based on a result of the coordinate calculation. In this way, by performing coordinate calculation on the at least some reference objects, a reference object with a stronger adaptability and higher position expression precision can be obtained.

In a possible implementation, after the performing coordinate calculation on at least some reference objects in the second at least one reference object based on a preset rule to obtain a calculation result, the method may further include: optimizing the calculation result according to some rules, and determining the first at least one reference object based on an optimized result. Some rules are, for example, as follows: If a distance between a reference object obtained through calculation and an element on the map is less than a threshold, the reference object is optimized to a position point of the element on the map. The coordinate calculation result is optimized to ensure position accuracy of the reference object.

In a possible implementation, the information about the first reference object set further indicates at least one of the following content: a position of each reference object in the first at least one reference object relative to each of the at least some reference objects, the preset rule, and the at least some reference objects.

In this way, the at least some reference objects are indicated in the first map information, so that when a reference point in the second map information is updated, an associated reference point in the first map information may be updated based on an association relationship. A position of each reference object in the first at least one reference object relative to each of the at least some reference objects is indicated in the first map information. When a reference point in the second map information disappears, another reference point in the second map information may be used to calculate a relative position, so that calculation of a reference point in the first map information is not affected, and a redundancy design is implemented. How to calculate coordinates of the at least some reference objects is indicated in the first map information, so that a position of a reference point in the first map information may be further determined by performing secondary calculation by using the at least some reference objects. This can reduce a position error of the reference point in the first map information and improve position precision.

In a possible implementation, the map information generation method may further include: determining that a first map element has a change, where the first map element is associated with the first reference object set; and updating the information about the first reference object set based on the change of the first map element. In this way, accuracy of the first map information is ensured by updating the first map element.

In a possible implementation, the map information generation method further includes: determining that the information about the second reference object set has a change; and updating the information about the first reference object set based on the change of the information about the second reference object set. In this way, when the information about the second reference object set changes, the information about the first reference object set may be updated in a timely manner, to ensure accuracy of the first map information.

In a possible implementation, the first map information further includes position information. The position information indicates a position of an element or an event on a map relative to at least some reference objects in the first at least one reference object. In this way, position information is transferred between different electronic devices, and a problem that position information provided by different map vendors is not universal is resolved.

In a possible implementation, the first at least one reference object includes a first reference object and a second reference object. The position information includes first position information and second position information. The first position information indicates a position of the element or event relative to the first reference object. The second position information indicates a position of the element or event relative to the second reference object. In this way, relative position expression may be performed based on a plurality of reference objects, to ensure accuracy of position information.

In a possible implementation, the information about the first reference object set includes information about a third reference object set and information about a fourth reference object set. The information about the third reference object set indicates the first identifier, in the geographic area, of each reference object in a third at least one reference object and indicates the first position of each reference object in the third at least one reference object. The information about the fourth reference object set indicates the first identifier, in the geographic area, of each reference object in a fourth at least one reference object and indicates the first position of each reference object in the fourth at least one reference object. The first at least one reference object includes the third at least one reference object and the fourth at least one reference object. The first map information may be sent in the following manner: sending the first map information based on a plurality of data packets, where the information about the third reference object set and the information about the fourth reference object set are carried in different data packets for sending. In this way, the first map information is sent in packets, and may be used in a scenario in which a quantity of reference objects in the first map information is large, so that air interface overheads can be reduced.

According to a second aspect, this application provides a map information use method, including: obtaining first map information, where the first map information includes information about a first reference object set, and the information about the first reference object set indicates a first identifier, in a geographic area, of each reference object in a first at least one reference object included in the first reference object set, and indicates a first position of each reference object in the first at least one reference object; and determining target position information of a target object based on the first map information, where the target position information indicates a position of the target object, and the target object is an element or an event on a map.

In a possible implementation, the information about the first reference object set further indicates at least one of the following content: current version information, previous version information, an update status of each reference object, a type of each reference object, a priority of each reference object, position precision of each reference object, confidence of each reference object, a map element associated with each reference object, and an identifier of the geographic area.

In a possible implementation, the map information use method further includes: receiving second map information, where the second map information includes information about a second reference object set, and the information about the second reference object set indicates a second identifier, in the geographic area, of each reference object in a second at least one reference object included in the second reference object set, and indicates a second position of each reference object in the second at least one reference object. Correspondingly, the first map information may be obtained in the following manner: generating the information about the first reference object set based on the information about the second reference object set; and generating the first map information based on the information about the first reference object set.

In a possible implementation, the first map information further includes association indication information, and the association indication information indicates that the first map information is generated based on the second map information.

In a possible implementation, the generating the information about the first reference object set based on the information about the second reference object set includes: selecting some reference objects from the second at least one reference object as the first at least one reference object.

In a possible implementation, the generating the information about the first reference object set based on the information about the second reference object set includes: performing coordinate calculation on at least some reference objects in the second at least one reference object based on a preset rule; and determining the first at least one reference object based on a result of the coordinate calculation.

In a possible implementation, the information about the first reference object set further indicates at least one of the following content: a position of each reference object in the first at least one reference object relative to each of the at least some reference objects, the preset rule, and the at least some reference objects.

In a possible implementation, the map information use method further includes: determining that the information about the second reference object set has a change; and updating the information about the first reference object set based on the change of the information about the second reference object set.

In a possible implementation, the determining target position information of a target object based on the first map information includes: selecting a target reference object from the first at least one reference object; obtaining initial position information that is of the target object and that is based on an initial reference object, where the initial reference object is different from the target reference object; and converting the initial position information into the target position information based on a position relationship between the target reference object and the initial reference object.

For example, a reference object that is in the first at least one reference object and that is located within a preset range around the target object is used as the target reference object. Alternatively, a reference object whose precision is higher than a threshold or whose priority is higher than a threshold is selected from the first at least one reference object as the target reference object.

Optionally, when there are a plurality of reference objects within the preset range around the target object, a reference object with a highest priority may be selected as the target reference object from the plurality of reference objects within the preset range around the target object. Alternatively, a reference object with highest position precision is selected as the target reference object. Alternatively, a reference object with highest confidence is selected as the target reference object.

In this implementation, the initial reference object may belong to the first reference object set, or may not belong to the first reference object set. The initial position information may be position information that is sensed by a sensor and that is based on a sensing coordinate system, or may be position information of target objects provided by different map vendors.

In a possible implementation, the first map information further includes position information. The position information indicates a position of the target object. The position information is based on a third at least one reference object included in the first reference object set. The information about the first reference object set includes information about a third reference object set. The information about the third reference object set indicates a third identifier, in the geographic area, of each reference object in the third at least one reference object, and indicates a third position of each reference object in the third at least one reference object. Correspondingly, the target position information may be determined based on the position information and the information about the third reference object set.

In a possible implementation, when there are a plurality of pieces of position information, and there are a plurality of reference objects in the third at least one reference object, correspondingly, the target position information may be determined in the following manner: selecting a first reference object from the plurality of reference objects based on the third reference object information; and selecting first position information from the plurality of pieces of position information as the target position information, where the first position information corresponds to the first reference object.

In a possible implementation, the information about the first reference object set includes information about a fourth reference object set and information about a fifth reference object set. The information about the fourth reference object set indicates the first identifier, in the geographic area, of each reference object in a fourth at least one reference object and indicates the first position of each reference object in the fourth at least one reference object. The information about the fifth reference object set indicates the first identifier, in the geographic area, of each reference object in a fifth at least one reference object and indicates the first position of each reference object in the fifth at least one reference object, and the first at least one reference object includes the fourth at least one reference object and the fifth at least one reference object. The first map information may be obtained in the following manner: The first map information is obtained by receiving a plurality of data packets. The information about the fourth reference object set and the information about the fifth reference object set are carried in different data packets for sending.

In a possible implementation, the target object is an element or an event on a map. The target position information includes second position information and third position information. The first reference object set includes a second reference object and a third reference object. The second position information indicates a position of a vehicle relative to the second reference object, and the third position information indicates a position of the vehicle relative to the third reference object. Correspondingly, the map information use method further includes: determining that a distance between the third reference object and the vehicle is less than a distance between the second reference object and the vehicle; and replacing displaying the second position information with displaying the third position information, or replacing performing assisted driving decision-making based on the second position information with performing assisted driving decision-making based on the third position information.

In a possible implementation, the target object is an element or an event on a map. The target position information includes second position information and third position information. The first reference object set includes a second reference object and a third reference object. The second position information indicates a position of a vehicle relative to the second reference object, and the third position information indicates a position of the vehicle relative to the third reference object. Correspondingly, the map information use method further includes: determining that the third reference object is better than the second reference object based on the information about the first reference object set; and replacing displaying the second position information with displaying the third position information, or replacing performing assisted driving decision-making based on the second position information with performing assisted driving decision-making based on the third position information.

Optionally, it is determined that the third reference object is better than the second reference object when the information about the first reference object set meets at least one of the following conditions: a priority of the third reference object is higher than a priority of the second reference object; position precision of the third reference object is higher than position precision of the second reference object; confidence of the third reference object is higher than confidence of the second reference object; and a distance between the third reference object and the vehicle is less than a distance between the second reference object and the vehicle.

In a possible implementation, before the replacing, the method further includes: determining that a vehicle speed of the vehicle is less than a threshold. In this way, in a process in which the vehicle travels at a low speed, a reference object on which relative position expression is based may be switched. In a high-speed driving process of the vehicle, switching of a reference object is avoided as much as possible, or a frequency of switching a reference object is reduced, to ensure driving safety of the vehicle.

According to a third aspect, this application provides a map information generation apparatus, including a processor and a memory. The memory stores a computer program, and the processor runs the computer program to implement the method according to any one of the first aspect or the implementations of the first aspect.

According to a fourth aspect, this application provides a map information use apparatus, including a processor and a memory. The memory stores a computer program, and the processor runs the computer program to implement the method according to any one of the second aspect or the implementations of the second aspect.

According to a fifth aspect, this application provides a map information generation apparatus, including:
a generation module, configured to generate first map information, where the first map information includes information about a first reference object set, and the information about the first reference object set indicates a first identifier, in a geographic area, of each reference object in a first at least one reference object included in the first reference object set, and indicates a first position of each reference object in the first at least one reference object; and
a sending module, configured to send the first map information.

In a possible implementation, the information about the first reference object set further indicates at least one of the following content: current version information; previous version information, an update status of each reference object, a type of each reference object, a priority of each reference object, position precision of each reference object, confidence of each reference object, a map element associated with each reference object, and an identifier of the geographic area.

In a possible implementation, the generation module is specifically configured to: obtain second map information, where the second map information includes information about a second reference object set, and the information about the second reference object set indicates a second identifier, in the geographic area, of each reference object in a second at least one reference object included in the second reference object set, and indicates a second position of each reference object in the second at least one reference object; generate the information about the first reference object set based on the information about the second reference object set; and generate the first map information based on the information about the first reference object set.

In a possible implementation, the first map information further includes association indication information, and the association indication information indicates that the first map information is generated based on the second map information.

In a possible implementation, the generation module is specifically configured to select some reference objects from the second at least one reference object as the first at least one reference object.

In a possible implementation, the generation module is specifically configured to: perform coordinate calculation on at least some reference objects in the second at least one reference object based on a preset rule; and determine the first at least one reference object based on a result of the coordinate calculation.

In a possible implementation, the information about the first reference object set further indicates at least one of the following content: a position of each reference object in the first at least one reference object relative to each of the at least some reference objects; the preset rule; and the at least some reference objects.

In a possible implementation, the generation module is further configured to: determine that a first map element has a change, where the first map element is associated with the first reference object set; and update the information about the first reference object set based on the change of the first map element.

In a possible implementation, the generation module is further configured to: determine that the information about the second reference object set has a change; and update the information about the first reference object set based on the change of the information about the second reference object set.

In a possible implementation, the first map information further includes position information. The position information indicates a position of an element or an event on a map relative to at least some reference objects in the first at least one reference object.

In a possible implementation, the first at least one reference object includes a first reference object and a second reference object. The position information includes first position information and second position information. The first position information indicates a position of the element or event relative to the first reference object. The second position information indicates a position of the element or event relative to the second reference object.

In a possible implementation, the information about the first reference object set includes information about a third reference object set and information about a fourth reference object set. The information about the third reference object set indicates the first identifier, in the geographic area, of each reference object in a third at least one reference object and indicates the first position of each reference object in the third at least one reference object. The information about the fourth reference object set indicates the first identifier, in the geographic area, of each reference object in a fourth at least one reference object and indicates the first position of each reference object in the fourth at least one reference object. The sending module is specifically configured to: send the first map information based on a plurality of data packets. The information about the third reference object set and the information about the fourth reference object set are carried in different data packets for sending.

The information generation apparatus according to the third aspect and the fifth aspect may be a cloud device, a road side device, or a terminal device. The cloud device is, for example, a map server, or a software module, a hardware module, a chip, or a chip system in the map server. The road side device is, for example, a road side unit, or a software module, a hardware module, a chip, or a chip system in the road side unit. The terminal device is, for example, a vehicle, or a software module, a hardware module, a chip, or a chip system in the vehicle. This application includes but is not limited to what is described herein.

According to a sixth aspect, this application provides a map information use apparatus, including:
an obtaining module, configured to obtain first map information, where the first map information includes information about a first reference object set, and the information about the first reference object set indicates a first identifier, in a geographic area, of each reference object in a first at least one reference object included in the first reference object set, and indicates a first position of each reference object in the first at least one reference object; and
a determining module, configured to determine target position information of a target object based on the first map information, where the target position information indicates a position of the target object, and the target object is an element or an event on a map.

In a possible implementation, the information about the first reference object set further indicates at least one of the following content: current version information; previous version information, an update status of each reference object, a type of each reference object, a priority of each reference object, position precision of each reference object, confidence of each reference object, a map element associated with each reference object, and an identifier of the geographic area.

In a possible implementation, the obtaining module is further configured to: receive second map information, where the second map information includes information about a second reference object set, and the information about the second reference object set indicates a second identifier, in the geographic area, of each reference object in a second at least one reference object included in the second reference object set, and indicates a second position of each reference object in the second at least one reference object. The obtaining module is specifically configured to: generate the information about the first reference object set based on the information about the second reference object set; and generate the first map information based on the information about the first reference object set.

In a possible implementation, the first map information further includes association indication information, and the association indication information indicates that the first map information is generated based on the second map information.

In a possible implementation, the obtaining module is specifically configured to select some reference objects from the second at least one reference object as the first at least one reference object.

In a possible implementation, the obtaining module is specifically configured to: perform coordinate calculation on at least some reference objects in the second at least one reference object based on a preset rule; and determine the first at least one reference object based on a result of the coordinate calculation.

In a possible implementation, the information about the first reference object set further indicates at least one of the following content: a position of each reference object in the first at least one reference object relative to each of the at least some reference objects; the preset rule; and the at least some reference objects.

In a possible implementation, the obtaining module is further configured to: determine that the information about the second reference object set has a change; and update the information about the first reference object set based on the change of the information about the second reference object set.

In a possible implementation, the determining module is specifically configured to: select a target reference object from the first at least one reference object; obtain initial position information that is of the target object and that is based on an initial reference object, where the initial reference object is different from the target reference object; and convert the initial position information into the target position information based on a position relationship between the target reference object and the initial reference object.

In a possible implementation, the first map information further includes position information. The position information indicates a position of the target object. The position information is based on a third at least one reference object included in the first reference object set. The information about the first reference object set includes information about a third reference object set. The information about the third reference object set indicates a third identifier, in the geographic area, of each reference object in the third at least one reference object, and indicates a third position of each reference object in the third at least one reference object. The determining module is specifically configured to: determine the target position information based on the position information and the information about the third reference object set.

In a possible implementation, when there are a plurality of pieces of position information, and there are a plurality of reference objects in the third at least one reference object, the determining module is specifically configured to: select a first reference object from the plurality of reference objects based on the third reference object information; and select first position information from the plurality of pieces of position information as the target position information, where the first position information corresponds to the first reference object.

In a possible implementation, the information about the first reference object set includes information about a fourth reference object set and information about a fifth reference object set. The information about the fourth reference object set indicates the first identifier, in the geographic area, of each reference object in a fourth at least one reference object and indicates the first position of each reference object in the fourth at least one reference object. The information about the fifth reference object set indicates the first identifier, in the geographic area, of each reference object in a fifth at least one reference object and indicates the first position of each reference object in the fifth at least one reference object, and the first at least one reference object includes the fourth at least one reference object and the fifth at least one reference object. The obtaining module is specifically configured to: obtain the first map information by receiving a plurality of data packets. The information about the fourth reference object set and the information about the fifth reference object set are carried in different data packets for sending.

In a possible implementation, the target object is an element or an event on a map. The target position information includes second position information and third position information. The first reference object set includes a second reference object and a third reference object. The second position information indicates a position of a vehicle relative to the second reference object, and the third position information indicates a position of the vehicle relative to the third reference object. The apparatus further includes a control module, configured to: determine that a distance between the third reference object and the vehicle is less than a distance between the second reference object and the vehicle; and replace displaying the second position information with displaying the third position information, or replace performing assisted driving decision-making based on the second position information with performing assisted driving decision-making based on the third position information.

In a possible implementation, the target object is an element or an event on a map. The target position information includes second position information and third position information. The first reference object set includes a second reference object and a third reference object. The second position information indicates a position of a vehicle relative to the second reference object, and the third position information indicates a position of the vehicle relative to the third reference object. The apparatus further includes: a control module, configured to: determine that the third reference object is better than the second reference object based on the information about the first reference object set; and replace displaying the second position information with displaying the third position information, or replace performing assisted driving decision-making based on the second position information with performing assisted driving decision-making based on the third position information.

In a possible implementation, the control module is further configured to: before the replacing, determine that a vehicle speed of the vehicle is less than a threshold.

The information use apparatus according to the fourth aspect and the sixth aspect may be a cloud device, a road side device, or a terminal device. The cloud device is, for example, a map server, or a software module, a hardware module, a chip, or a chip system in the map server. The road side device is, for example, a road side unit, or a software module, a hardware module, a chip, or a chip system in the road side unit. The terminal device is, for example, a vehicle, or a software module, a hardware module, a chip, or a chip system in the vehicle. This application includes but is not limited to what is described herein.

According to a seventh aspect, this application provides a vehicle, including the map information use apparatus according to any one of the fourth aspect or the implementations of the fourth aspect, or including the map information use apparatus according to any one of the sixth aspect or the implementations of the sixth aspect.

According to an eighth aspect, this application provides a system, including a map information generation apparatus and a map information use apparatus, where the map information generation apparatus is configured to perform the method according to any one of the first aspect or the implementations of the first aspect, and the map information use apparatus is configured to perform the method according to any one of the second aspect or the implementations of the second aspect.

According to a ninth aspect, this application provides a map, including first map information, where the first map information includes information about a first reference object set, and the information about the first reference object set indicates a first identifier, in a geographic area, of each reference object in a first at least one reference object included in the first reference object set, and indicates a first position of each reference object in the first at least one reference object.

In a possible implementation, the information about the first reference object set further indicates at least one of the following content: current version information, previous version information, an update status of each reference object, a type of each reference object, a priority of each reference object, position precision of each reference object, confidence of each reference object, a map element associated with each reference object, and an identifier of the geographic area.

In a possible implementation, the first map information further includes position information. The position information indicates a position of an element or an event on a map relative to at least some reference objects in the first at least one reference object.

In a possible implementation, the first at least one reference object includes a first reference object and a second reference object. The position information includes first position information and second position information. The first position information indicates a position of the element or event relative to the first reference object. The second position information indicates a position of the element or event relative to the second reference object.

According to a tenth aspect, this application provides a computer-readable storage medium. The computer-readable storage medium stores a computer program, and when the computer program is run, the method according to any one of the first aspect or the implementations of the first aspect is implemented, or the method according to any one of the second aspect or the implementations of the second aspect is implemented.

According to an eleventh aspect, this application provides a computer-readable storage medium. The computer-readable storage medium stores the map according to any one of the ninth aspect or the implementations of the ninth aspect.

According to a twelfth aspect, this application provides a computer program product. The computer program product stores a computer program, and when the computer program is run, the method according to any one of the first aspect or the implementations of the first aspect is implemented, or the method according to any one of the second aspect or the implementations of the second aspect is implemented.

It should be understood that the third aspect to the eleventh aspect of this application correspond to the technical solutions of the first aspect or the second aspect of this application, and beneficial effects achieved by the aspects and the corresponding feasible implementations are similar. Details are not described again.

### BRIEF DESCRIPTION OF DRAWINGS

FIG. 1A is a schematic diagram of an application scenario according to an embodiment of this application;
FIG. 1B is a schematic diagram of performing relative position expression based on a reference point;
FIG. 2 is a schematic flowchart of a map information generation and use method according to an embodiment of this application;
FIG. 3 is a schematic diagram of a reference object according to an embodiment of this application;
FIG. 4 is a schematic diagram of an EP-type reference point according to an embodiment of this application;
FIG. 5 is a schematic diagram of a CP-type reference point according to an embodiment of this application;
FIG. 6 is a schematic diagram of another CP-type reference point according to an embodiment of this application;
FIG. 7 is a schematic diagram of still another CP-type reference point according to an embodiment of this application;
FIG. 8 is a schematic diagram of a PV-type reference point according to an embodiment of this application;
FIG. 9 is a schematic diagram of an LCP-type reference point according to an embodiment of this application;
FIG. 10 is a schematic diagram of a TM-type reference point according to an embodiment of this application;
FIG. 11 is a schematic diagram of a TS-type reference point according to an embodiment of this application;
FIG. 12A is a schematic diagram of an organization manner of information about a reference object set according to an embodiment of this application;
FIG. 12B is a schematic diagram of another organization manner of information about a reference object set according to an embodiment of this application;
FIG. 12C is a schematic diagram of still another organization manner of information about a reference object set according to an embodiment of this application;
FIG. 13 is a schematic diagram of a reference object layer according to an embodiment of this application;
FIG. 14 is a schematic flowchart of another map information generation and use method according to an embodiment of this application;
FIG. 15 is a schematic diagram of another reference point layer according to an embodiment of this application;
FIG. 16 is a schematic flowchart of another map information generation and use method according to an embodiment of this application;
FIG. 17 is a schematic diagram of a structure of a map information generation apparatus according to an embodiment of this application;
FIG. 18 is a schematic diagram of a structure of a map information use apparatus according to an embodiment of this application;
FIG. 19 is a schematic diagram of a structure of another map information generation apparatus according to an embodiment of this application; and
FIG. 20 is a schematic diagram of a structure of another map information use apparatus according to an embodiment of this application.

### DESCRIPTION OF EMBODIMENTS

For ease of understanding the following embodiments, the following description is first provided.

First, for ease of differentiation and understanding, the following definitions are provided. An information generation apparatus carries a first map, and an information use apparatus carries a second map. The first map and the second map may be from a same map vendor, or may be from different map vendors. This is not limited in embodiments of this application. Position points that are on the first map and that are used for position point matching are referred to as a first position point set. Position points that are on the second map and that may match the first position point set are referred to as a second position point set, and position points in the second position point set are referred to as a second at least one position point. Position points used to perform position expression on a position reference point on the first map are referred to as a first at least one position point, and the first at least one position point is a subset of the first position point set. Position points used to calculate a position reference point on the second map are referred to as a third at least one position point.

Second, "sending" in embodiments of the present application may be performed between devices, for example, may be performed between different cloud devices, or may be performed between different terminal devices, or may be performed between different road side devices. Alternatively, "sending" may be performed between a cloud device and a terminal device, or may be performed between a cloud device and a road side device, or may be performed between a terminal device and a road side device. For another example, "sending" may be performed in a device. For example, "sending" is performed between components, between units, between chips, between software modules, or between hardware modules in the device through a bus, a cabling, or an interface. For example, a map may be sent in a same cloud device, or may be sent in a same terminal device, or may be sent in a same road side device.

In embodiments of the present application, "receiving" may be performed between devices, for example, may be performed between different cloud devices, or may be performed between different terminal devices, or may be performed between different road side devices. Alternatively, "receiving" may be performed between a cloud device and a terminal device, or may be performed between a cloud device and a road side device, or may be performed between a terminal device and a road side device. For another example, "receiving" may be performed in a device. For example, "receiving" is performed between components, between units, between chips, between software modules, or between hardware modules in the device through a bus, a cabling, or an interface. For example, a map may be received in a same cloud device, or may be received in a same terminal device, or may be received in a same road side device.

Third, in embodiments of this application, prefix words such as "first" and "second" are used only to distinguish and describe different things belonging to a same name category, and do not restrict a sequence or a quantity of the things. For example, "first information" and "second information" are only information with different content or purposes, and there is no time sequence relationship or priority relationship between the two. The first information may be one or more pieces of information, and the second information may also be one or more pieces of information.

Fourth, in embodiments of this application, "at least one" means one or more, and "a plurality of' means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including a single item (piece) or any combination of a plurality of items (pieces). For example, at least one item (piece) of a, b, or c may represent a, b, c, a and b, a and c, b and c, or a, b, and c, where a, b, and c each may be singular or plural.

Fifth, in embodiments of this application, "when" and "if" both mean that an apparatus performs corresponding processing in an objective situation, are not intended to limit time, do not require the apparatus to necessarily have a determining action during implementation, and do not mean any other limitation either.

Sixth, "simultaneously" in embodiments of this application may be understood as being at a same time point, or may be understood as being within a time period, or may be understood as being within a same period. This may be specifically understood with reference to a context.

Seventh, in embodiments of this application, the word like "example" or "for example" is used to represent giving an example, an illustration, or a description. Any embodiment or design solution described as an "example" or "for example" in this application should not be explained as being more preferred or having more advantages than another embodiment or design solution. Exactly, use of the word like "example" or "for example" is intended to present a related concept in a specific manner.

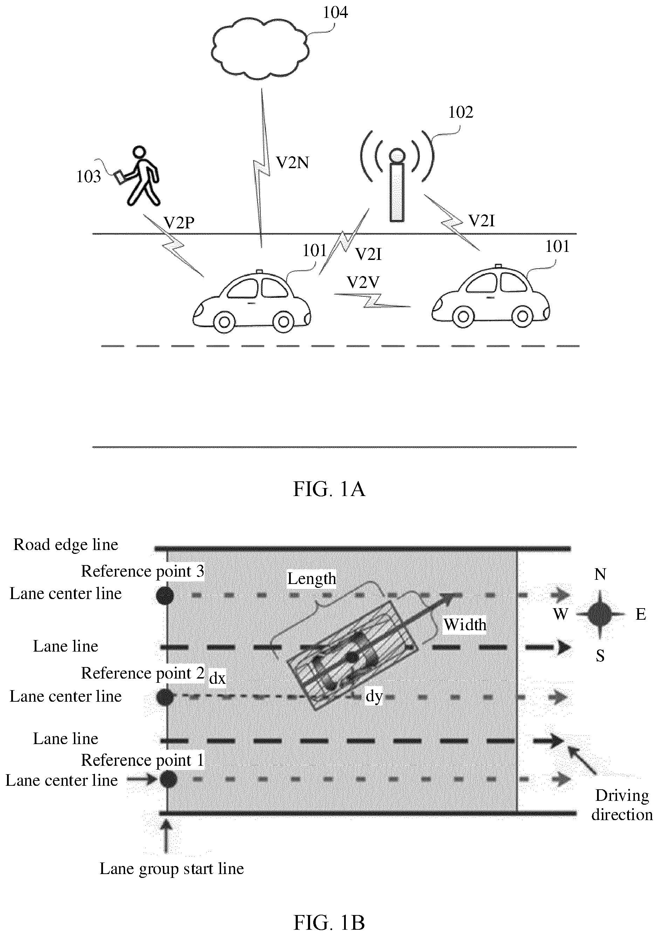

A possible application scenario in embodiments of this application is described first with reference to FIG. 1A.

FIG. 1Ais a schematic diagram of an application scenario according to an embodiment of this application. The scenario shown in FIG. 1A is a V2X scenario. As shown in FIG. 1A, the V2X scenario may include a vehicle 101, a road side infrastructure 102, a pedestrian 103, and a cloud network 104.

V2X is a technology for implementing communication between a vehicle and the outside, where V represents a vehicle, and X represents a vehicle, a pedestrian, a road side infrastructure, a cloud network, or the like. In other words, V2X communication may include vehicle to vehicle (vehicle to vehicle, V2V) communication, vehicle to infrastructure (vehicle to infrastructure, V2I) communication, vehicle to pedestrian (vehicle to pedestrian, V2P) communication, vehicle to network (vehicle to network, V2N) communication, and the like.

With development of network technologies and intelligent vehicle technologies, functions that may be implemented by vehicles through V2X communication are increasingly enriched. For example, the vehicle may obtain various information services through V2I and V2N communication, including but not limited to traffic signal light information, vehicle information in a nearby area, vehicle navigation information, emergency rescue information, entertainment service information, and the like. The vehicle may obtain information like a speed, a position, a driving status, and a pedestrian activity of a surrounding vehicle in real time through the V2V communication and the V2P communication, and may implement a collision warning function by using an intelligent algorithm to avoid a traffic accident of the vehicle. The vehicle may further implement functions such as vehicle speed guidance through the V2I communication, to improve traffic efficiency.

In the V2V communication, electronic devices that communicate with each other may be located in two vehicles, for example, may be handheld devices of users in the vehicles or vehicle-mounted devices. In the V2I communication, electronic devices that communicate with each other may be located in a vehicle and a road side infrastructure. For example, one electronic device may be a handheld device of a user in the vehicle or a vehicle-mounted device, and the other electronic device may be a road side unit (road side unit, RSU). The RSU may be understood as an infrastructure entity that supports a V2X application, and may exchange information with another electronic device that supports the V2X communication. In the V2P communication, electronic devices that communicate with each other may be located in a vehicle and on a pedestrian. In the V2N communication, electronic devices that communicate with each other may be located in a vehicle and a server. In conclusion, a form of an electronic device is not limited in this application, and forms of electronic devices that communicate with each other may be the same or may be different.

A map is closely related to driving of a vehicle. In particular, a high-definition map is used as an important input of an intelligent driving function, and accuracy and effectiveness of high-definition map data affect driving safety of the vehicle. Therefore, an electronic device in a V2X communication network is provided with a high-definition map. The high-definition map is a high-resolution digital map that can update data in real time. The high-definition map is not only a part of a sensing system, but also an important part of system decision-making, and has a plurality of functions such as high-precision locating, auxiliary environment sensing, planning, and decision-making. Compared with a conventional navigation map, the high-definition map provides not only high-precision coordinates, but also detailed data information like a road shape, lane information, course, and a curvature. In addition, when used with big data and artificial intelligence, the high-definition map may further provide real-time data to assist decision-making, so that the vehicle is more intelligent and secure.

In some scenarios, position expression needs to be performed on an element or an event. In some solutions, position expression may be performed by using relative coordinates. Specifically, a map vendor determines some reference points based on a cartographic rule and a number of a map element, and when expressing position information of an element or an event, uses a relative position of the element or the event relative to the reference point for expression.

FIG. 1B is a schematic diagram of performing relative position expression based on a reference point. As shown in FIG. 1B, in a high-definition map cartographic process, a lane group start line is determined based on a road interruption rule, and a crossover point between the lane group start line and a lane center line is determined as a reference point. For example, FIG. 1B shows three reference points: a reference point 1, a reference point 2, and a reference point 3. The reference point 1 is a crossover point between the lane group start line and a first lane center line, the reference point 2 is a crossover point between the lane group start line and a second lane center line, and the reference point 3 is a crossover point between the lane group start line and a third lane center line. When position expression needs to be performed on a vehicle, relative position information of a vehicle center point relative to a reference point may be calculated. For example, FIG. 1B shows relative position information (dx, dy) between the vehicle center point and the reference point 2, and the relative position information (dx, dy) is used as position information of the vehicle, where dx is a directional distance from a projection point from the vehicle center point to a center line of a lane 2 to the reference point 2, and dy is a directional distance from the vehicle center point to the projection point.

However, because different map vendors use different cartographic rules and map element numbering methods, different map vendors perform relative position expression based on different reference points. As a result, position information expressed by maps provided by the different map vendors is not universal.

In addition, in the foregoing solution, a reference point is determined based on a cartographic rule and a number of a map element, and the number of the map element is interrupted based on the road interruption rule. Consequently, density of determined reference points is uneven, and there may be the following problem: It is relatively difficult to change and adjust a reference point. In a scenario in which a road interruption occurs frequently, a reference point needs to be frequently switched. In a scenario in which a road interruption occurs less frequently, there may be a problem that no reference point can be switched when a reference point needs to be switched.

Embodiments of this application provide a map information generation method and apparatus, a map information use method and apparatus, a map, a storage medium, and a program, which may be applied to the following two application scenarios.

In a first application scenario, first map information generated in embodiments of this application is stored in a device, that is, the first map information is used as a part of map data. When position expression needs to be performed on an element or an event, at least some reference objects in the first map information may be selected to perform relative position expression, so that flexibility and accuracy of expressing position information are improved, and a problem of uneven reference point density caused by the road interruption rule in the foregoing solution is resolved. In addition, the first map information generated in embodiments of this application is maintained inside the device, to facilitate management and index association of the reference object.

In a second application scenario, first map information generated in embodiments of this application and position information of an element or an event are transferred between different devices. The position information of the element or event indicates a relative position of the element or the event relative to the at least some reference objects in the first map information. In other words, the first map information generated in embodiments of this application may be used as a part of an information transmission format between different electronic devices. In this way, even if maps of different map vendors are installed in two devices that interact with each other, the two devices can accurately determine, by using a reference object in the first map information, position information transferred by each other. This ensures that the position information is transferred between the different devices, and improves universality of the map information. The different devices for transferring position information may be the vehicle and the vehicle in FIG. 1A, may be the pedestrian and the vehicle in FIG. 1A, may be the road side infrastructure and the vehicle in FIG. 1A, may be the cloud network and the vehicle in FIG. 1A, may be the road side infrastructure and the cloud network in FIG. 1A, may be the road side infrastructure and the road side infrastructure in FIG. 1A, or may be the cloud network and the cloud network in FIG. 1A. This is not limited herein.

Specific embodiments are used below to describe in detail the technical solutions of this application. The following several specific embodiments may be combined with each other, and a same or similar concept or process may not be described repeatedly in some embodiments.

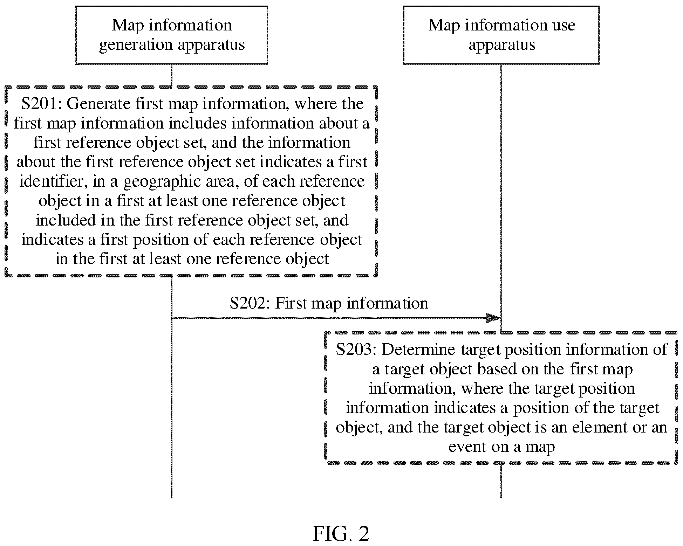

FIG. 2 is a schematic flowchart of a map information generation and use method according to an embodiment of this application. As shown in FIG. 2, the method in this embodiment includes the following steps.

S201: A map information generation apparatus generates first map information, where the first map information includes information about a first reference object set, and the information about the first reference object set indicates a first identifier, in a geographic area, of each reference object in a first at least one reference object included in the first reference object set, and indicates a first position of each reference object in the first at least one reference object.

S202: The map information generation apparatus sends the first map information to a map information use end.

Correspondingly, a map information use apparatus receives the first map information from the map information generation apparatus.

In this embodiment of this application, the map information generation apparatus may be a cloud device, a road side device, or a terminal device. The cloud device may be, for example, a map server, or a software module, a hardware module, or a chip in the map server. The road side device may be, for example, a road side unit, or a software module, a hardware module, or a chip in the road side unit. The terminal device is, for example, a vehicle, or a software module, a hardware module, or a chip in the vehicle.

In this embodiment of this application, the map information use apparatus may be a cloud device, a road side device, or a terminal device. The cloud device may be, for example, a map server, or a software module, a hardware module, or a chip in the map server. The road side device may be, for example, a road side unit, or a software module, a hardware module, or a chip in the road side unit. The terminal device is, for example, a vehicle, or a software module, a hardware module, or a chip in the vehicle.

The map information generation apparatus and the map information use apparatus may be deployed in a same electronic device, or may be deployed in different electronic devices.

When the map information generation apparatus and the map information use apparatus are deployed in a same electronic device, the foregoing "sending" and "receiving" may be understood as sending and receiving inside the electronic device. Optionally, the electronic device may be a cloud device, a road side device, or a terminal device.

When the map information generation apparatus and the map information use apparatus are deployed in different electronic devices, the foregoing "sending" and "receiving" may be understood as sending and receiving between electronic devices, that is, a first electronic device on which the map information generation apparatus is deployed sends the map information to a second electronic device on which the map information use apparatus is deployed. The first electronic device and the second electronic device may be two electronic devices that need to transfer position information. Optionally, the first electronic device may be a cloud device, a road side device, or a terminal device. The second electronic device may also be a cloud device, a road side device, or a terminal device.

In this embodiment of this application, a map is arranged in an electronic device in which a map information generation apparatus is deployed. It may be understood that the map in embodiments of this application is an electronic map. For example, the map may be a high-definition map.

In this embodiment of this application, one or more reference objects may be selected from the map to form a first reference object set, and information about the first reference object set is obtained. The information about the first reference object set indicates a first identifier, in a geographic area, of each reference object included in the first reference object set, and indicates a first position of each reference object included in the first reference object set. Further, the first map information including the information about the first reference object set is generated.

The reference object includes a reference point and/or a reference line. The reference line includes one or more of the following: a straight line, a dashed line, and a broken line. For example, when the reference object is the reference point, the reference object may be a point that may be determined based on a map element, for example, an end point of a stop line, an end point of a lane center line, an end point of a road center line, an end point of a lane line, an end point of a road edge line, a crossover point of a lane line and a stop line, a crossover point of a lane line and a lane line, a crossover point of a road edge line and a road edge line, a lane line change point, a center point of an external frame of a traffic marking, a vertex of an external polygon of a traffic marking, a ground projection point corresponding to a center point of an external frame of a traffic sign, a ground projection point corresponding to a center point of an external frame of a traffic signal light frame, or the like. When the reference object is the reference line, the reference object may be a map element, or may be a line that may be determined based on the map element. For example, the reference line may be a stop line, a lane line, a lane center line, a road center line, a road edge line, or the like.

In this embodiment of this application, the reference object is used to provide a reference for position expression of an element or an event on a map. Specifically, position information of the element or the event on the map may be expressed based on a relative position of the element or the event on the map relative to the reference object.

Optionally, the first identifier of each reference object in the geographic area may be an identifier of the reference object in an entire map area, for example, a serial number of the reference object in the entire map area. A numbering rule of the reference object may be determined by a map vendor. It may be understood that each reference object has a unique identifier in the entire map area.

In some scenarios, the map is managed by using map tiles. The map tiles are map slice files that include a series of scales and specific map ranges, thereby facilitating map management. For example, a process of forming the map tiles is as follows: Map software (for example, ArcGIS software) processes map data, configures an applied layer solution, and saves the solution; and the map software divides the map into grids based on the solution, to obtain the map tiles. Each map tile has an identifier, and the identifier of the map tile may be a serial number of the map tile. A numbering rule of the map tile may be determined by the map vendor.

Optionally, the first identifier of each reference object in the geographic area may alternatively be an identifier of the reference object in a map tile, for example, a serial number of the reference object in the map tile in which the reference object is located. A numbering rule of the reference object in each map tile is determined by the map vendor. It may be understood that each reference object has a unique identifier in a map tile in which the reference object is located.

Optionally, the first position of each reference object may be expressed by using absolute coordinates. For example, absolute coordinate information based on a GCJ02 coordinate system may be used.

Optionally, the first position of each reference object may be expressed by using relative coordinates. For example, coordinate offset information in three directions in an East-North-Up coordinate system may be used.

Optionally, first positions of some reference objects are expressed by using absolute coordinates, and first positions of other reference objects are expressed by using relative coordinates.

Optionally, when the first position of each reference object is expressed by using absolute coordinates or relative coordinates, the information about the first reference object set may further indicate a type of a reference coordinate system. For example, the type of the reference coordinate system may be an East-North-Up coordinate system.

Optionally, when the reference object is a map element, the first position may alternatively be expressed by indicating the map element.

In a possible implementation, the first map information may further include position information, and the position information indicates a position of an element or an event on a map. It should be understood that the position information indicates a relative position of the element or event on the map relative to one or more reference objects.

For example, a target reference object is selected from the first reference object set based on the information about the first reference object set. A relative position of the element or the event relative to the target reference object is calculated, and position information of the element or the event is generated based on the relative position.

Optionally, when the target reference object is selected from the first reference object set, a reference object with a higher priority may be selected based on a priority of each reference object. Alternatively, a reference object with higher position precision may be selected based on position precision of each reference object. Alternatively, a reference object with higher confidence may be selected based on confidence of each reference object.

In actual application, when the target reference object is selected, a priority, position precision, and confidence of each reference object may be further comprehensively considered.

In a possible implementation, the first reference object set includes a first reference object and a second reference object. The position information includes first position information and second position information. The first position information indicates a position of the element or event relative to the first reference object. The second position information indicates a position of the element or event relative to the second reference object. To be specific, when relative position expression is performed, the relative position expression may be performed based on a plurality of reference objects.

It should be understood that, the foregoing description is provided by using an example in which relative position expression is performed based on two reference objects. In actual application, more reference objects may be used for relative position expression, and examples are not described in this embodiment. By using a plurality of reference objects for relative position expression, accuracy of expressed position information can be ensured.

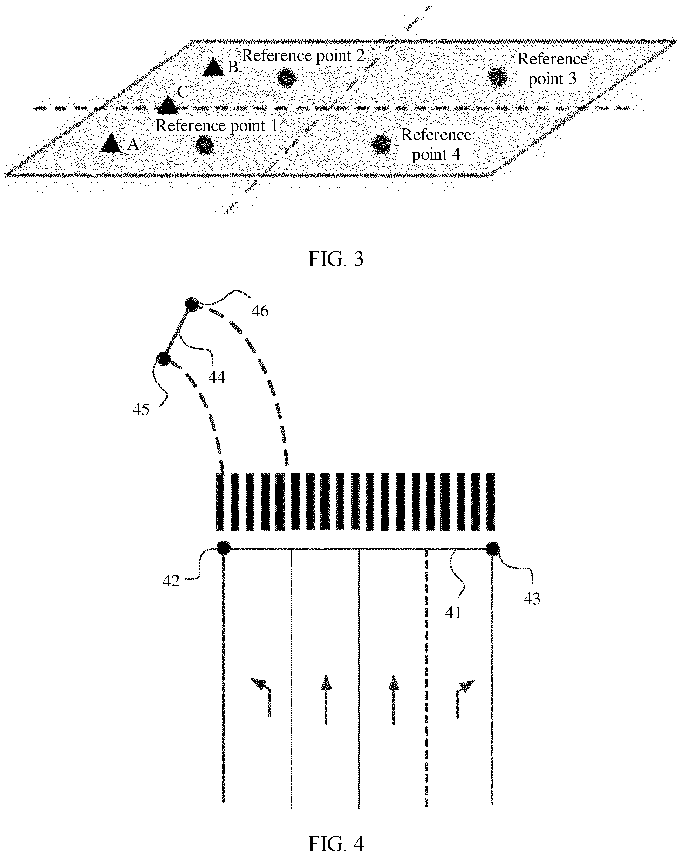

For example, FIG. 3 is a schematic diagram of a reference object according to an embodiment of this application. The reference object shown in FIG. 3 is a reference point. As shown in FIG. 3, it is assumed that there are four reference points in total, and a range may be divided for each reference point. When relative position expression of a target object needs to be performed, the relative position expression may be performed based on a reference point within a range in which the target object is located. For example, when relative position expression of a target object A needs to be performed, the relative position expression may be performed based on a reference point 1. When relative position expression of a target object B needs to be performed, the relative position expression may be performed based on a reference point 2. In this way, when relative position expression is performed, a relatively adjacent reference point is selected, to ensure precision of position expression.

Further, when position expression needs to be performed on a target object in a transition area of the two area ranges, relative position expression of the target object may be separately performed simultaneously based on reference points in the two area ranges. For example, refer to FIG. 3. When relative position expression needs to be performed on a target object C, the relative position expression may be performed separately based on the reference point 1 and the reference point 2. In this way, position information of the target object C includes a relative position based on the reference point 1 and a relative position based on the reference point 2. In this way, accuracy of the position information of the target object C may be ensured. In addition, in a scenario in which the target object C moves, stability of a moving track of the target object C may be ensured.

S203: The map information use apparatus determines target position information of a target object based on the first map information, where the target position information indicates a position of the target object, and the target object is an element or an event on a map.

In this embodiment, the target position information indicates a position of the target object relative to at least some reference objects in the first reference object set.

In a possible implementation, the target position information of the target object may be determined in the following manner.
(1) Select a target reference object from the first at least one reference object.

For example, a reference object that is in the first at least one reference object and that is located within a preset range around the target object is used as the target reference object.

Optionally, when there are a plurality of reference objects within the preset range around the target object, a reference object with a highest priority may be selected as the target reference object from the plurality of reference objects within the preset range around the target object. Alternatively, a reference object with highest position precision is selected as the target reference object. Alternatively, a reference object with highest confidence is selected as the target reference object.

(2) Obtain initial position information that is of the target object and that is based on an initial reference object, where the initial reference object is different from the target reference object.

The initial reference object may belong to the first reference object set, or may not belong to the first reference object set. The initial position information may be position information that is sensed by a sensor and that is based on a sensing coordinate system, or may be position information of target objects provided by different map vendors.

(3) Convert the initial position information into the target position information based on a position relationship between the target reference object and the initial reference object.

In this way, the converted target position information of the target object indicates a relative position relative to the target reference object.

In a possible implementation, the first map information further includes position information, and the position information indicates a position of the target object. The position information is based on a third at least one reference object included in the first reference object set. The information about the first reference object set includes information about a third reference object set. The information about the third reference object set indicates a third identifier, in the geographic area, of each reference object in the third at least one reference object, and indicates a third position of each reference object in the third at least one reference object. In this way, when determining the target position information of the target object, the map information use apparatus may determine the target position information based on the position information and the information about the third reference object set.

In a possible implementation, the position information includes a plurality of pieces of position information, and the third at least one reference object includes a plurality of reference objects. In this way, when determining the target position information of the target object, the map information use apparatus may select a first reference object from the plurality of reference objects based on third reference object information. Further, first position information is selected from the plurality of pieces of position information as the target position information. The first position information corresponds to the first reference object. To be specific, in a scenario of transferring the position information of the target object, if relative position expression is performed by using a plurality of reference objects based on the position information, a relative position expression result corresponding to one of the reference objects may be selected as the target position information of the target object. Specifically, which reference object is selected may be selected based on a relative position expression requirement of an actual application scenario. For example, a reference object with a highest priority is selected. Alternatively, a reference object with highest position precision is selected. Alternatively, a reference object with highest confidence is selected.

In this embodiment of this application, the first map information may be stored in the map by generating the first map information. In this way, when position expression is performed by using the map, relative position expression may be performed based on a reference object indicated by the first map information. For example, when position expression of an element/event is performed, one or more target reference objects may be determined in the first map information, and a relative position of the element/event relative to the target reference object is used as position information of the element/event.

Further, when the first electronic device needs to transfer the position information of the target object to the second electronic device, the first electronic device may perform relative position expression on the target object based on the reference object indicated by the first map information, to obtain relative position information of the target object, and send the relative position information to the second electronic device. In this way, because the relative position information is transferred between the first electronic device and the second electronic device, deflection processing does not need to be performed, so that a deflection error is avoided, and locating precision of the second electronic device is ensured.

In conclusion, in this embodiment of this application, the first map information is generated. The first map information includes the information about the first reference object set, and the information about the first reference object set indicates the first identifier, in the geographic area, of each reference object in the first at least one reference object included in the first reference object set, and indicates the first position of each reference object in the first at least one reference object. The first map information is generated, and the first map information indicates related information of each reference object in the first reference object set, to implement a manner of expressing the related information of the reference object more abundantly, so that maps provided by different map vendors may use reference objects in the first map information to perform position expression on an element or an event. This ensures that position information expressed by the maps provided by the different map vendors is universal.

Based on the foregoing embodiment, the following describes in detail how to select a reference object and content of the information about the first reference object set with reference to specific examples. In the following examples, an example in which the reference object is a reference point is used for illustration. When the reference object is the reference line, a principle and an implementation process of the reference line are similar to those of the reference point, and examples are not described in embodiments of this application again.

It should be noted that when the reference point is selected, the reference point may be extracted from a map, or may be extracted from raw data collected for map drawing. This is not specifically limited in embodiments of this application.

In embodiments of this application, when a reference point is selected, the reference point may be defined based on one or more of the following selection principles:
(1) Generality principle: The reference point is a point that is generally included in a cartographic specification of each map vendor or data collected by the map vendor.
(2) Stability principle: The reference point is a point that changes slightly on a map.
(3) Deterministic principle: The reference point is a point that is defined clearly without vague semantic understanding.
(4) Precision principle: The reference point is a point with high position precision, and an error caused by cartographic difference between different map vendors is small.

For example, a crossover point between a lane line physical marking and a stop line physical marking meets the foregoing generality principle, stability principle, deterministic principle, and precision rule, and the crossover point may be used as a reference point. Similarly, an end point, a crossover point, a vertex, a breakpoint, or the like of a lane line or a stop line may be selected as a reference point. Alternatively, a ground projection point corresponding to a geometric center point or a geometric center point of a traffic sign, a traffic marking, a traffic signal light box, a building, or a vegetation external frame may be selected as a reference point.

With reference to Table 1, the following uses several possible examples to describe a definition of the reference point and related information of the reference point. In embodiments of this application, the definition of the reference point is mainly used to specify how to select the reference point, and is used to distinguish a type of the reference point.

**Table 1**

| Reference point definition | Additional information and rule description | Type number | Priority |
|---|---|---|---|
| Left and right end points of a stop line physical marking of a through lane | Distinguish the left and right end points based on a stop line: Distinguish the left and right end points based on a driving direction on a road on which the stop line is located, where the left end point is located on a left side of the driving direction, and the right end point is located on a right side of the driving direction | EP01 and EP02 | First priority |
| Left and right end points of a stop line physical marking of a left-turn waiting zone | | EP03 and EP04 | First priority |
| Crossover point between a stop line physical marking of a through lane and an N^{th} lane line physical marking of the through lane | Additional number information of an N^{th} lane line | CP01 | First priority |
| | Rule: Number lane lines from left to right in a driving direction on a road, starting from 1 A lane line with a minimum number is a left edge line of the road, and a lane line with a maximum number value is a right edge line of the road | CP02 | First priority |
| Crossover point between a stop line physical marking of a left-turn waiting zone and an N^{th} lane line physical marking of the left-turn waiting zone | | | |
| Crossover point of physical markings of two road side lines | | CP03 | First priority |
| Crossover point of virtual extension lines of two road side lines | | CP04 | Third priority |
| Crossover point of two lane center lines | | CP05 | Third priority |
| Vertex of an external polygon of a crosswalk | | PV01 | Second priority |
| Lane line type change point | Additional line type information, indicating a change from line type A to line type B | LCP01 | Second priority |
| | Rule: Define line types, for example, from a single solid line A to a single dotted line B | | |
| Lane line color change point | Additional color type information, indicating a change from color A to color B | LCP02 | Second priority |
| | Rule: Define line colors, for example, from a white line A to a yellow line B | | |
| Lane line cross-attribute change point | Additional cross-attribute information, indicating a change from an attribute A to an attribute B | LCP03 | Second priority |
| | Rule: Define attributes, for example, from the attribute A to the attribute B | | |
| Ground projection point corresponding to a geometric center of an external frame of a traffic sign | Additional type number of the traffic sign, for example, a number of a speed limit sign | TS01 | Second priority |
| | Rule: The external frame is limited to a rectangle, circle, or triangle | | |
| Geometric center point of an external frame of a traffic marking | Additional marking type number, for example, a number of a left-turn arrow | TM01 | Second priority |
| | Rule: The external frame is limited to a rectangle, circle, or triangle | | |
| Ground projection point corresponding to a geometric center of an external frame of a traffic signal light frame | Rule: The external frame is limited to a rectangle | TL01 | Second priority |

Example 1: Left and right end points of a stop line physical marking of a through lane
Example 2: Left and right end points of a stop line physical marking of a left-turn waiting zone

The types of the reference points defined in the foregoing two examples may be referred to as an end point (end point, EP) type. FIG. 4 is a schematic diagram of an EP-type reference point according to an embodiment of this application. As shown in FIG. 4, a left end point 42 and a right end point 43 of a stop line physical marking 41 of a through lane are selected as reference points, and a left end point 45 and a right end point 46 of a stop line physical marking 44 of a left-turn waiting zone are selected as reference points.

It should be noted that, in the foregoing two examples, the left and right end points of the stop line physical marking are selected as reference points. Because the stop line physical marking generally has a specific width, in actual application, left and right end points of a center line of the stop line physical marking may be selected as reference points. Alternatively, left and right end points of an inner side line (a side line close to a side of a lane) of the stop line physical marking may be selected as reference points. Alternatively, left and right end points of an outer side line (a side line away from a side of a lane) of the stop line physical marking may be selected as reference points.
Example 3: Crossover point between a stop line physical marking of a through lane and an N^{th} lane line physical marking of the through lane
Example 4: Crossover point between a stop line physical marking of a left-turn waiting zone and an N^{th} lane line physical marking of the left-turn waiting zone
Example 5: Crossover point of physical markings of two road side lines
Example 6: Crossover point of virtual extension lines of two road side lines
Example 7: Crossover point of lane center lines

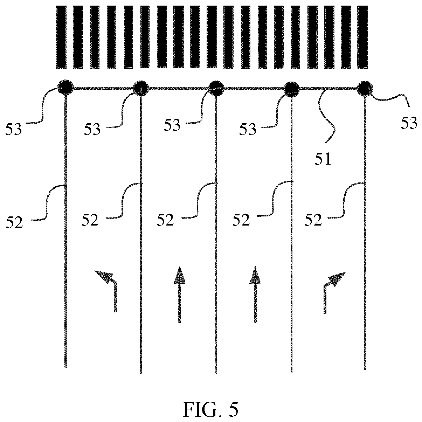

The types of the reference points defined in Example 3 to Example 7 may be referred to as a crossover point (crossover point, CP) type. The following provides an example with reference to FIG. 5 to FIG. 7.

FIG. 5 is a schematic diagram of a CP-type reference point according to an embodiment of this application. FIG. 5 is a schematic diagram of the foregoing Example 3. As shown in FIG. 5, a crossover point 53 between a stop line physical marking 51 of the through lane and each lane line physical marking 52 is selected as a reference point.

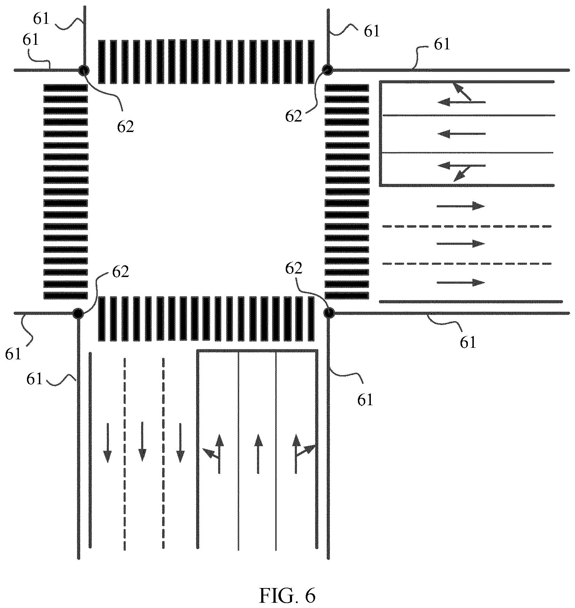

FIG. 6 is a schematic diagram of another CP-type reference point according to an embodiment of this application. FIG. 6 is a schematic diagram of the foregoing Example 5. As shown in FIG. 6, a crossover point 62 of physical markings 61 of the two road side lines is selected as a reference point. In some scenarios, there may be no actual crossover point between the two road side lines. For example, a junction of the two road side lines is an arc. In this case, a crossover point of virtual extension lines of the two road side lines may be selected as a reference point (that is, Example 6). This case is similar to FIG. 6, and is not described again with reference to the accompanying drawings.

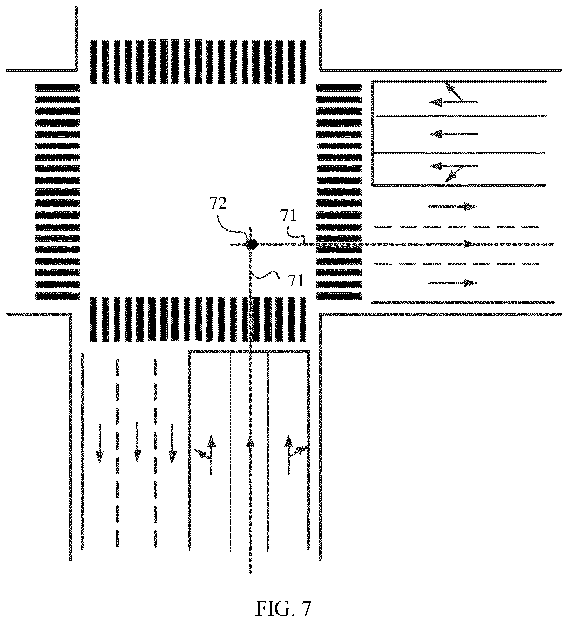

FIG. 7 is a schematic diagram of still another CP-type reference point according to an embodiment of this application. FIG. 7 is a schematic diagram of the foregoing Example 7. As shown in FIG. 7, a crossover point 72 between two lane center lines 71 is selected as a reference point. It should be understood that, in FIG. 7, each road includes 6 lanes, and two roads include 12 lanes in total. In FIG. 7, only a crossover point of center lines of two lanes is used as an example for illustration. In actual application, a crossover point of center lines of any two lanes may be selected as a reference point.

### Example 8: Vertex of an external polygon of a crosswalk

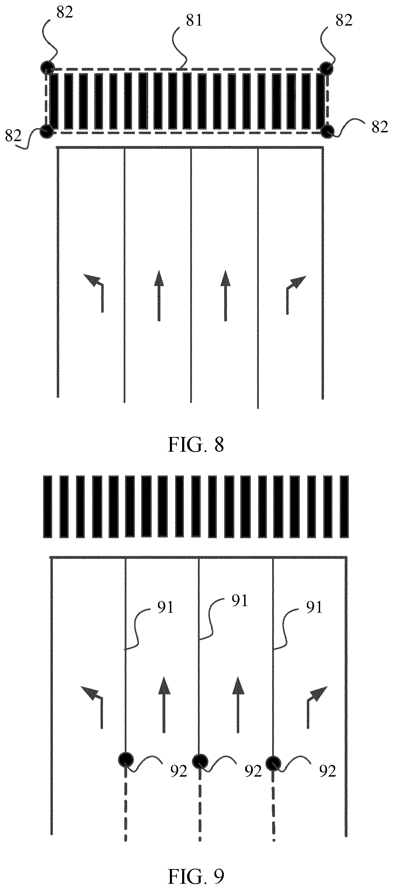

The type of the reference point defined in the foregoing Example 8 may be referred to as a polygon vertex (polygon vertex, PV) type. FIG. 8 is a schematic diagram of a PV-type reference point according to an embodiment of this application. As shown in FIG. 8, four vertices 82 of an external rectangular frame 81 of the crosswalk are selected as reference points.
Example 9: Lane line type change point, where for example, a lane line is changed from a solid line to a dashed line, or from a dashed line to a solid line.
Example 10: Lane line color change point, where for example, a lane line is changed from a yellow line to a white line, from a white line to a yellow line, or the like.
Example 11: Lane line cross-attribute change point, where a cross-attribute refers to an attribute other than a line type and line color of a lane line.

The types of the reference points defined in Example 9 to Example 11 may be referred to as a line change point (line change point, LCP) type. FIG. 9 is a schematic diagram of an LCP-type reference point according to an embodiment of this application. As shown in FIG. 9, a change point 92 at which a lane line 91 is changed from a dashed line to a solid line is selected as a reference point. It should be noted that the foregoing Example 9 (line type change) is used as an example for illustration in FIG. 9. Example 10 and Example 11 are similar cases, and are not described again by using examples with reference to the accompanying drawings.

### Example 12: Geometric center point of an external frame of a traffic marking

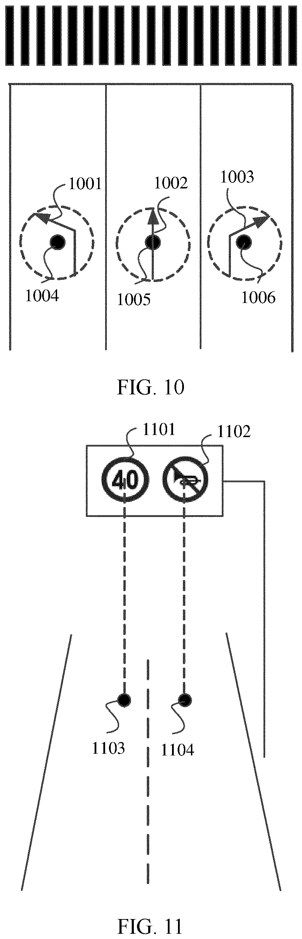

The type of the reference point defined in the foregoing Example 12 may be referred to as a traffic marking (traffic marking, TM) type. FIG. 10 is a schematic diagram of a TM-type reference point according to an embodiment of this application. As shown in FIG. 10, a geometric center point 1004 of a circular external frame of a left-turn arrow 1001 is selected as a reference point, a geometric center point 1005 of a circular external frame of a straight arrow 10021 is selected as a reference point, and a geometric center point 1006 of a circular external frame of a right-turn arrow 1003 is selected as a reference point. It should be noted that, in FIG. 10, a circular external frame is used as an example for illustration, and a rectangular external frame, a triangular external frame, or the like may alternatively be used.

### Example 13: Ground projection point corresponding to a geometric center point of an external frame of a traffic sign

The type of the reference point defined in the foregoing Example 13 may be referred to as a traffic sign (traffic sign, TS) type. FIG. 11 is a schematic diagram of a TS-type reference point according to an embodiment of this application. As shown in FIG. 11, a ground projection point 1103 corresponding to a geometric center point of an external frame of a speed limit sign 1101 is selected as a reference point, and a ground projection point 1104 corresponding to a geometric center point of an external frame of a no-horn sign 1102 is selected as a reference point. It should be noted that the external frame may be a circular external frame, a rectangular external frame, a triangular external frame, or the like.

### Example 14: Ground projection point corresponding to a geometric center of an external frame of a traffic signal light frame

The type of the reference point defined in the foregoing Example 14 may be referred to as a traffic light (traffic light, TL) type. It should be understood that how to select a reference point in Example 14 is similar to that in Example 13, and an example is not described herein again with reference to the accompanying drawings. In an actual environment, the traffic signal light frame is generally a rectangular frame. Therefore, the external frame in Example 14 may be a rectangular external frame.

It should be noted that the reference points shown in Example 1 to Example 14 and FIG. 4 to FIG. 11 are merely some possible examples. Embodiments of this application are not limited thereto.

After one or more reference points are selected, information about a first reference object set is generated based on related information of each reference point. In addition to indicating a first identifier of each reference point in a geographic area and a first position of each reference point, the information about the first reference object set may further indicate at least one of the following content: current version information, previous version information, an update status of each reference object, a type of each reference object, a priority of each reference object, position precision of each reference object, confidence of each reference object, a map element associated with each reference object, and an identifier of the geographic area. In this way, the information about the first reference object set describes each reference object more abundantly, so that the reference object can be located more accurately.

The following separately describes each of the foregoing items.

In a possible implementation, the information about the first reference object set may further indicate a type of each reference point.

In embodiments of this application, for ease of use, a type of a reference point may be encoded. It should be noted that an encoding form of the type of the reference point is not limited in embodiments of this application. For example, an integer field may be used for encoding, or a character string may be used for encoding.

The following uses an example to describe a coding manner of the type of the reference point.

For example, the type of each reference point may include a first type number. The first type number indicates that the type of the reference point is any one of the following: an EP type, a CP type, a PV type, an LCP type, a TM type, a TS type, and a TL type. It may be understood that the first type number is used to distinguish how to select a reference point.

Optionally, the type of each reference point may alternatively include a second type number. The second type number is related to a type of a map element on which the manner of selecting the reference point is based.

For example, the foregoing Example 1 and Example 2 are used as an example. Refer to Table 1. Type information of a main reference point defined for "a left end point of a stop line physical marking of a through lane" may be encoded as EP01, and type information of a main reference point defined for "a right end point of a stop line physical marking of a through lane" may be encoded as EP02. Type information of a main reference point defined for "a left end point of a stop line physical marking of a left-turn waiting zone" may be encoded as EP03, and type information of a reference point defined for "a right end point of a stop line physical marking of a left-turn waiting zone" may be encoded as EP04. During encoding, "EP" is a first type code, and "01", "02", "03", and "04" are second type numbers.

It should be noted that, for the main reference points defined in Example 3 to Example 14, encoding manners of the type information of the main reference points are similar, and examples are not described one by one in this embodiment. For some example type encoding results, refer to Table 1.

In a possible implementation, the information about the first reference object set may further indicate additional information of each reference point. The additional information is used to further describe reference points in detail and a clearly set description rule, so as to accurately distinguish the reference points. The additional information of the reference point may include the following two pieces of content:
(a) Agreed rule, where for example, lane lines are sequentially numbered from left to right in a driving direction on a road, starting from 1. A lane line with a minimum number value is a left edge line of the road, and a lane line with a maximum number value is a right edge line of the road.
(b) Additional description, where the reference point is a crossover point between a third lane line and a stop line.

It should be noted that, a form of the additional description is not limited in this embodiment, and a program-oriented expression manner may be defined, or a text description manner may be used.

For example, for additional information corresponding to the reference points defined in the foregoing examples, refer to Table 1.

In a possible implementation, the additional information may be further encoded into the type of the reference point, so that the additional information may be distinguished in detail only based on the type of the reference point. For example, CP01 in the foregoing table may be specifically numbered CP01-02, indicating a crossover point between a stop line of a through lane and a second lane line of a road. For another example, LCP01 in the foregoing table may be specifically numbered LCP01-01-02, indicating a change of a lane line type from a single solid line (01) to a single dashed line (02).

It can be learned that in this embodiment of this application, a type (for example, an EP type, a CP type, a PV type, an LCP type, a TM type, a TS type, or a TL type) of a reference point determined based on how to select the reference point may be used as a first-level type of the reference point. The additional information may be used as a second-level type of the reference point, and is used to subdivide the reference point type.

It should be noted that in this embodiment of this application, an expression form of the additional information and an encoding form of the type information are merely an example, and are not limited in this embodiment. In actual application, the additional information and the type information may be directly encoded as a whole, or hierarchical encoding may be performed on the additional information and the type information, for example, first-level type encoding and second-level type encoding.

In a possible implementation, the information about the first reference object set may further indicate a priority of each reference point. The priority may indicate a degree of compliance between the reference point and a preset reference point selection principle, and the preset reference point selection principle includes one or more of the following: a generality principle, a stability principle, a deterministic principle, and a precision principle. For example, a higher degree of compliance between a reference point and the preset reference point selection rule indicates a higher priority of the reference point, and a lower degree of compliance between a reference point and the preset reference point selection rule indicates a lower priority of the reference point.

For example, for the priorities of the reference points defined in the foregoing examples, refer to Table 1. The first priority is higher than the second priority, and the second priority is higher than the third priority.

A priority is set for each reference point. In this way, when relative position expression is performed on a target object, if there are a plurality of reference points around the target object, a reference point with a higher priority may be selected to perform the relative position expression. This improves accuracy of the expressed position information.

In a possible implementation, the information about the first reference object set may further indicate position precision of each reference point. Position precision of a reference point may indicate precision of a first position of the reference point. For example, position precision of each reference point may be determined by performing evaluation based on a position error of the reference point. Higher position precision of a reference point indicates a smaller position error of the reference point. When the reference point is used to perform the relative position expression on the target object, precision of a relative position expression result of the target object is higher.

Position precision is set for each reference point. In this way, when relative position expression is performed on a target object, if there are a plurality of reference points around the target object, a reference point with higher position precision may be selected to perform the relative position expression. This improves accuracy of the expressed position information.

In a possible implementation, the information about the first reference object set may further indicate confidence of each reference point. Confidence of a reference point indicates a trust degree of a first position of the reference point. Higher confidence of a reference point indicates a higher trust degree of a first position of the reference point. When the reference point is used to perform the relative position expression on the target object, confidence of a relative position expression result of the target object is higher.

Confidence is set for each reference point. When relative position expression is performed on a target object, if there are a plurality of reference points around the target object, a reference point with higher position precision may be selected to perform the relative position expression. This improves confidence of the expressed position information.

In a possible implementation, the information about the first reference object set may further indicate a map element associated with each reference point. A map element associated with a reference point may be a map element on which how to select the reference point is based. For example, it is assumed that a reference point is a point at which a lane line is changed from a solid line to a dashed line, a map element associated with the reference point may be the lane line. It is assumed that a reference point is a left end point of a physical marking of a through lane stop line, a map element associated with the reference point may be the through lane stop line. It is assumed that a reference point is a crossover point between a through lane stop line and a lane line, map elements associated with the reference point may be the through lane stop line and the lane line.

A map element is associated with each reference point, so that an accurate position of the reference point may be quickly located based on an identifier of the map element associated with the reference point and a type of the reference point. This improves locating efficiency of the reference point.

In a possible implementation, the information about the first reference object set may further indicate an identifier of a geographic area in which each reference point is located. For example, the geographic area may be a map tile. For example, the identifier of the geographic area in which each reference point is located may be a number of a map tile in which the reference point is located. By indicating the identifier of the geographic area in which each reference point is located, locating efficiency and locating accuracy of the reference point may be ensured.

Optionally, for each geographic area, a reference point index table may be further established. The index table includes identifiers of all reference points in the geographic area and related information (for example, a first position, a type, a priority, position precision, confidence, and an associated map element) of each reference point. In this way, related information of a reference point related to an index may be quickly searched for based on the index table. This improves efficiency of using the first map information.

In a possible implementation, the information about the first reference object set may further indicate current version information and previous version information. The current version information indicates a current version of the first map information, and the previous version information indicates a previous version of the first map information. In an example, a version number may be set for the first map information. For example, a version of first map information generated for a first time may be set to V1. A version of first map information generated for a second time may be set to V2, or after the first map information generated for the first time is updated, a version of updated first map information may be set to V2, and so on. In another example, generation time or update time of the first map information may be used as version information.

In a possible implementation, the information about the first reference object set may further indicate an update status of each reference point. An update status of a reference point indicates a status change condition of the reference point relative to a previous version. For example, an update status of a reference point may be one of the following: added, unchanged, updated, or deleted.

An update status is set for each reference point, so that after receiving the first map information, a receiver may update, based on the update status of each reference point, a reference point whose status changes accordingly. This reduces a calculation amount and a processing delay of the receiver.

In an example, a first identifier of a reference point in first map information of each version may be consistent with that of a previous version. Table 2 provides a possible example. As shown in Table 2, a reference point 1 to a reference point 4 are added to first map information of a V1 version. In first map information of a V2 version, the reference point 2 is updated, the reference point 3 is deleted, and a reference point 5 is added. When receiving the first map information of the V2 version, the receiver only needs to perform update, deletion, and addition operations on the reference point 2, the reference point 3, and the reference point 5 respectively, and does not need to recalculate the reference point 1 and the reference point 4.

Further, as shown in Table 2, it is assumed that in first map information of a V3 version, the reference point 4 is updated, and the reference point 1, the reference point 2, and the reference point 5 remain unchanged. When receiving the first map information of the V3 version, the receiver only needs to update the reference point 4, and does not need to recalculate the reference point 1, the reference point 2, and the reference point 5.

**Table 2**

| Reference point number | V1 version | V2 version | V3 version | ... |
|---|---|---|---|---|
| 1 | Added | Remain unchanged | Remain unchanged | |
| 2 | Added | Updated | Remain unchanged | |
| 3 | Added | Deleted | - | |
| 4 | Added | Remain unchanged | Updated | |
| 5 | | Added | Remain unchanged | |

In another example, a first identifier of a reference point in first map information of each version may be different from that of a previous version. In this case, the information about the first reference object set needs to indicate a correspondence between each reference point in the current version and each reference point in the previous version. For example, Table 3 provides another possible example. As shown in Table 3, it is assumed that, in first map information of the current version received by the receiver, a correspondence between a reference point number of the current version and a reference point number of the previous version is: a reference point 1 of the current version corresponds to a reference point 1 of the previous version, and an update status of the reference point 1 of the current version is being unchanged; a reference point 2 of the current version corresponds to a reference point 3 of the previous version, and an update status of the reference point 2 of the current version is being unchanged; a reference point 3 of the current version corresponds to a reference point 4 of the previous version, and an update status of the reference point 3 of the current version is being updated; a reference point 4 of the current version corresponds to a reference point 2 of the previous version, and an update status of the reference point 4 of the current version is being updated; and a reference point 5 of the current version does not correspond to a reference point in the previous version, and an update status of the reference point 5 of the current version is being added.

After receiving the first map information of the current version, the receiver does not need to update the reference point 1, only needs to adjust a number of the reference point 2, needs to update the reference point 3 based on the reference point 4 of the previous version, needs to update the reference point 4 based on the reference point 2 of the previous version, and performs addition processing on the reference point 5.

**Table 3**

| Reference point number in a current version | Reference point number in a previous version | Status relative to the previous version |
|---|---|---|
| 1 | 1 | Remain unchanged |
| 2 | 3 | Remain unchanged |
| 3 | 4 | Updated |
| 4 | 2 | Updated |
| 5 | - | Added |

In a possible implementation, after a plurality of reference objects are selected from a map, a reference object with a higher priority, higher position precision, or higher confidence may be selected from the plurality of reference objects as a general reference object. For the general reference object, a first position may be expressed by using absolute coordinates, and for a common reference object (namely, a reference object other than the general reference object), a first position may be expressed by using relative coordinates of the common reference object relative to the general reference object. It may be understood that the general reference object is used to provide a position reference for the common reference object. After receiving the first map information, the receiver may determine the first position of the common reference object based on the first position of the common reference object. Further, position information of the target object is determined based on the first position of the common reference object.

When the first reference object set includes a plurality of reference objects, for the plurality of reference objects, there are a plurality of organization manners in the information about the first reference object set. The following provides several possible examples.

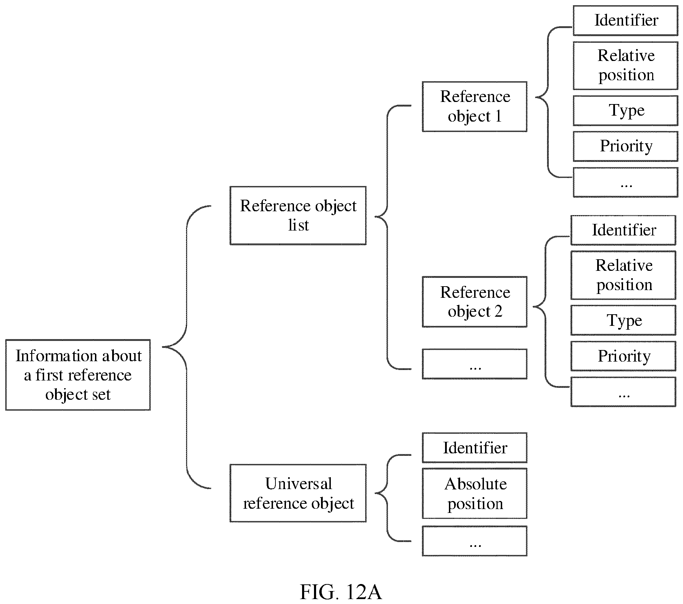

For example, FIG. 12A is a schematic diagram of an organization manner of information about a reference object set according to an embodiment of this application. As shown in FIG. 12A, a general reference object may be determined from a plurality of reference objects, and relative position expression is performed based on the general reference object for a first position of each reference object in the first reference object set. In this case, in a data structure of the information about the first reference object set, reference objects in the first reference object set may be uniformly organized without being grouped.

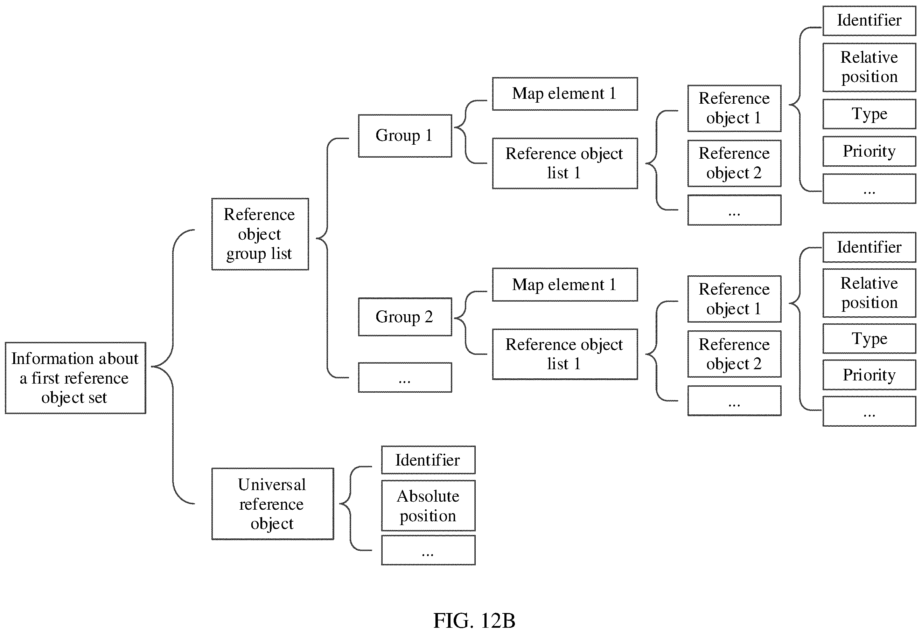

For example, FIG. 12B is a schematic diagram of another organization manner of information about a reference object set according to an embodiment of this application. As shown in FIG. 12B, a general reference object may be determined from a plurality of reference objects, and a first position of each reference object in the first reference object set is expressed based on the general reference object. In addition, group management is performed on the reference objects in the first reference object set. For example, a plurality of common reference points associated with a same map element may be classified into one group. To be specific, a plurality of reference objects selected based on a same map element are classified into one group.

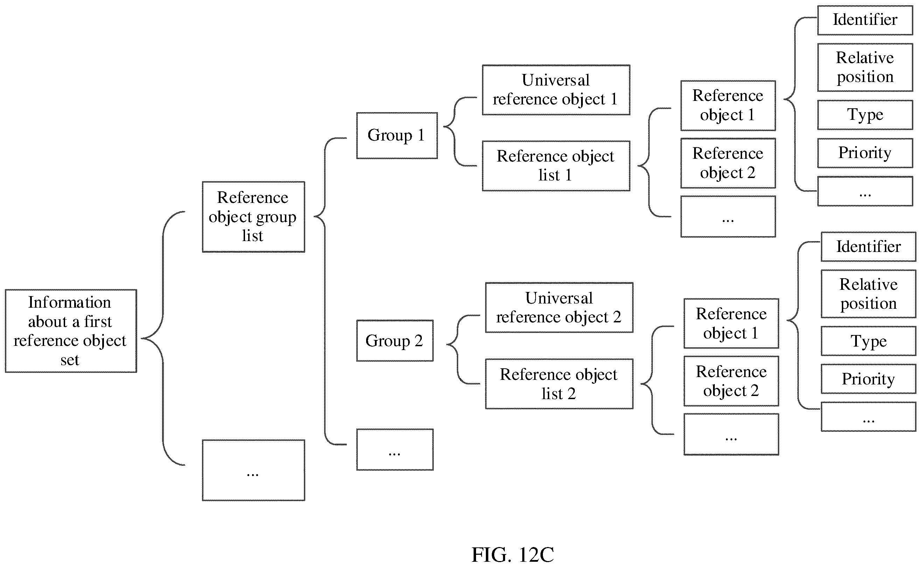

For example, FIG. 12C is a schematic diagram of still another organization manner of information about a reference object set according to an embodiment of this application. As shown in FIG. 12C, group management is performed on reference objects in the first reference object set. For example, reference objects may be grouped based on a road network structure. For example, reference objects in a same road are classified into one group. Alternatively, reference objects in a same lane are classified into one group. Alternatively, reference objects in a same intersection are classified into one group. Further, a general reference object is determined in each group. In this way, position expression is performed based on the general reference object in the group for a first position of each reference object in the group.

It may be understood that, by performing group management on the reference objects in the first reference object set, position expression may be performed based on different general reference objects on reference objects in different road network structures. This can improve locating accuracy, and further can increase a locating speed by implementing a diversity gain by using a plurality of general reference objects.

It may be learned from the foregoing manner of selecting a reference point that, in this embodiment of this application, the reference point is selected based on a map element. The map element based on which the reference point is selected is a physical element (like a lane line, a stop line, a traffic marking, a traffic sign, or a traffic light frame) that actually exists on a road, or a virtual element (like a lane center line or a road side line extension line) that may be accurately located based on a physical element that actually exists on a road. Therefore, reference points selected by different map vendors by using the solution in embodiments of this application are universal, and further, first map information generated by using the universal reference points is universal. In this way, when relative position expression is performed based on the first map information, universality of expressed position information is ensured, and therefore, the first map information may be applied to a scenario in which different electronic devices need to transfer position information.

The foregoing embodiment describes a generation and use process of the first map information. The following uses an example to describe a possible product form of the first map information.

Generally, the map may include one or more layers. For example, the map may include a base map, a static layer, a dynamic layer, and the like. The static layer may include a static map element in the map, and the dynamic layer may include a dynamic map element in the map. In this embodiment of this application, the first map information may be a part of a map data organization structure. In other words, the map may include the first map information. For example, the first map information may be used as a layer of the map. For ease of description, a layer corresponding to the first map information may be referred to as a reference object layer.

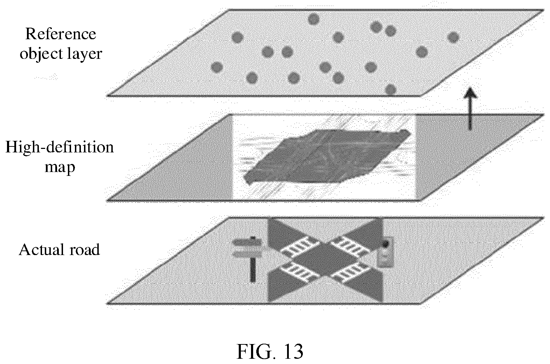

FIG. 13 is a schematic diagram of a reference object layer according to an embodiment of this application. As shown in FIG. 13, in a map construction process, a high-definition map may be constructed based on road elements in an actual road. In this embodiment of this application, a plurality of reference objects may be selected from the high-definition map, and first map information (namely, the reference object layer in FIG. 13) is generated based on related information of the reference objects. In FIG. 13, an example in which the reference object is a reference point is used, and each point in the reference object layer represents one reference point.

It should be noted that the first map information (the reference object layer) may be generated in a high-definition map construction process, or may be generated in an actual application scenario after the high-definition map is constructed. This is not limited in embodiments of this application.

On the basis of any one of the foregoing embodiments, in a possible implementation, after the generating first map information, the method may further include: determining that a first map element has a change, where the first map element is associated with the first reference object set; and updating the information about the first reference object set based on the change of the first map element, to update the first map information.

The following uses an example to describe an update process of the first map information.

It is assumed that a map element (for example, a speed limit sign is removed, or a left-turn waiting area is added at an intersection) in the map is updated, an identifier of the map element and a position of the map element may be obtained. A reference object associated with the map element is searched for in information about a first reference object set. It is determined whether a type, a position, and other attribute information of the reference object have a change, and if the type, the position, and the other attribute information have a change, the information about the first reference object set is updated. An updating manner may be adding, deleting, or modifying related information of the reference object.

According to the foregoing process, the first map information is updated in a timely manner, and updated first map information is used to perform relative position expression, to ensure accuracy of a position expression.

Based on any one of the foregoing embodiments, the following describes in more detail a map information generation method provided in this application with reference to a specific embodiment.

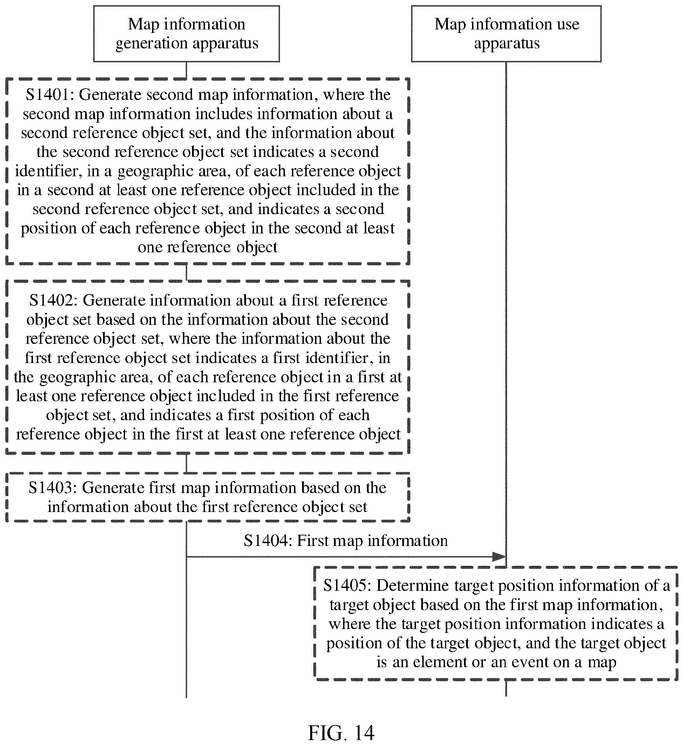

FIG. 14 is a schematic flowchart of another map information generation and use method according to an embodiment of this application. As shown in FIG. 14, the method in this embodiment includes the following steps.

S1401: A map information generation apparatus generates second map information. The second map information includes information about a second reference object set, and the information about the second reference object set indicates a second identifier, in a geographic area, of each reference object in a second at least one reference object included in the second reference object set, and indicates a second position of each reference object in the second at least one reference object.

In this embodiment, a process of generating the second map information by the map information generation apparatus is similar to a process of generating the first map information in the embodiment shown in FIG. 2. To be specific, at least one reference object is selected from a map, and the at least one reference object forms the second reference object set. The information about the second reference object set is generated based on related information of each reference object in the second reference object set. The information about the second reference object set indicates the second identifier, in the geographic area, of each reference object in the second at least one reference object included in the second reference object set, and indicates the second position of each reference object in the second at least one reference object. Further, the second map information including the information about the second reference object set is generated.

In a possible implementation, the information about the second reference object set further indicates at least one of the following content: current version information, previous version information, an update status of each reference object, a type of each reference object, a priority of each reference object, position precision of each reference object, confidence of each reference object, a map element associated with each reference object, and an identifier of the geographic area. For content of each item, refer to the detailed description in the foregoing embodiment. Details are not described herein again.

S1402: The map information generation apparatus generates information about a first reference object set based on the information about the second reference object set. The information about the first reference object set indicates a first identifier, in the geographic area, of each reference object in a first at least one reference object included in the first reference object set, and indicates a first position of each reference object in the first at least one reference object.

In a possible implementation, some reference objects may be selected from the second at least one reference object as the first at least one reference object.

For example, density thinning processing may be performed on the second at least one reference object based on a relative position expression requirement in an actual application scenario, to obtain the first at least one reference object. It may be understood that, in this case, the first at least one reference object is a subset of the second at least one reference object.

In this implementation, a quantity of reference objects may be reduced when position expression precision in the actual application scenario is met, to avoid a problem that a reference object is frequently changed because of a large quantity of reference objects.

In a possible implementation, coordinate calculation may be performed on at least some reference objects in the second at least one reference object based on a preset rule, to determine the first at least one reference object based on a result of the coordinate calculation. In this way, by performing coordinate calculation on the at least some reference objects, a reference object with a stronger adaptability and higher position expression precision can be obtained.

The preset rule may be a preset coordinate calculation manner. It should be understood that there are a plurality of coordinate calculation manners, which are not limited in this embodiment. For example, geometric center points of the at least some reference objects may be calculated.

For example, it is assumed that the second map information includes 10 reference points, which are a reference point 1 to a reference point 10. Coordinate calculation (for example, geometric center point calculation) may be performed on the reference point 1, the reference point 3, and the reference point 6 to obtain a new reference point 11. Coordinate calculation (for example, geometric center point calculation) may be performed on the reference point 2, the reference point 4, and the reference point 7 to obtain a new reference point 12. Coordinate calculation (for example, geometric center point calculation) may be performed on the reference point 8, the reference point 9, the reference point 5, and the reference point 10 to obtain a new reference point 13. In this way, the first map information includes the reference point 11, the reference point 12, and the reference point 13 that are obtained through the coordinate calculation.

In a possible implementation, after the performing coordinate calculation on at least some reference objects in the second at least one reference object based on a preset rule to obtain a calculation result, the method may further include: optimizing the calculation result according to some rules, and determining the first at least one reference object based on an optimized result. Some rules are, for example, as follows: If a distance between a reference object obtained through calculation and an element on the map is less than a threshold, the reference object is optimized to a position point of the element on the map. The coordinate calculation result is optimized to ensure position accuracy of the reference object.

In a possible implementation, the information about the first reference object set further indicates at least one of the following information: a position of each reference object in the first at least one reference object relative to each of the at least some reference objects, the preset rule, and the at least some reference objects.

For example, in the foregoing example, the coordination calculation is performed on the reference point 1, the reference point 3, and the reference point 6 in the second map information to obtain the reference point 11 in the first map information. In this case, it may be indicated in the first map information that the reference point 11 is associated with the reference line 1, the reference point 3, and the reference point 6. An association relationship between the reference points is indicated in the first map information, so that when a reference point in the second map information is updated, an associated reference point in the first map information may be updated based on the association relationship.

Optionally, the first map information may further indicate relative positions between the reference point 11 and the reference point 1, the reference point 3, and the reference point 6. Relative positions between the reference point 11 and a plurality of reference points in the second map information are indicated in the first map information, so that when a reference point in the second map information disappears, another reference point in the second map information may be used to calculate the relative position. This avoids impact on calculation of the reference point in the first map information, and implements redundancy design.

Optionally, the first map information may further indicate which coordinate calculation manner is used to calculate the reference point 11 based on the reference point 1 the reference point 3, and the reference point 6. How to calculate coordinates of the at least some reference objects is indicated in the first map information, so that a position of a reference point in the first map information may be further determined by performing secondary calculation by using the at least some reference objects. This can reduce a position error of the reference point in the first map information and improve position precision.

S 1403 : The map information generation apparatus generates the first map information based on the information about the first reference object set.

S1404: The map information generation apparatus sends the first map information to a map information use apparatus.

Correspondingly, the map information use apparatus receives the first map information.

S1405: The map information use apparatus determines target position information of a target object based on the first map information, where the target position information indicates a position of the target object, and the target object is an element or an event on a map.

An application scenario of this embodiment is as follows: The map information generation apparatus first generates the second map information, then generates the first map information based on the second map information, and sends the first map information to the map information use apparatus. The map information use apparatus uses the first map information to perform relative position expression.

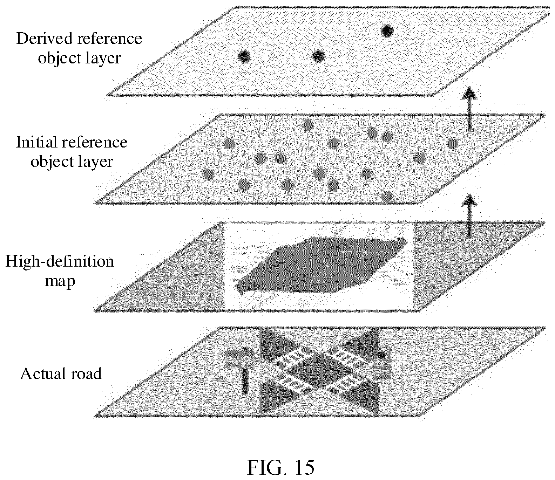

The second map information may be used as an initial reference object layer in the map, and the first map information may be used as a derivative reference point layer in the map. FIG. 15 is a schematic diagram of another reference point layer according to an embodiment of this application. As shown in FIG. 15, a plurality of reference objects may be selected from the map, and an initial reference object layer (namely, second map information) is generated based on related information of the reference objects. Further, one or more derived reference object layers (namely, first map information) may be derived based on the initial reference object layer. FIG. 15 illustrates a case in which the reference object is a reference point. Refer to FIG. 15. Each point in the initial reference object layer represents each reference point in a second reference object set, and each point in the derived reference object layer represents each reference point in a first reference object set.

In actual application, relative position expression requirements in different application scenarios are different. Therefore, a plurality of derived reference object layers may be generated based on the relative position expression requirements in the different application scenarios. In this way, in the different application scenarios, relative position expression may be performed based on different derived reference object layers.

For example, a first derived reference object layer may be generated for relative position expression for road-level and lane-level dynamic information (for example, traffic accident information). A second derived reference object layer may be generated for relative position expression for area-level dynamic information (for example, weather information). A third derived reference object layer may be generated for relative position expression for static information. Density of reference objects in the derived reference object layer generated for the foregoing three scenarios is different.

For another example, different derived reference object layers may be generated for map services of different levels or for self-driving levels of different levels. Density of reference objects in different derived reference object layers is different, so that different levels of locating accuracy are implemented in different scenarios.

In this embodiment, it is implemented that the first map information is generated based on the second map information. In a possible implementation, the first map information further includes association indication information, and the association indication information indicates that the first map information is generated based on the second map information.

The first map information includes the association indication information, so that when the second map information is updated, the first map information may be updated based on the association indication information.

Based on the embodiment shown in FIG. 14, in a possible implementation, after the map information generation apparatus generates the first map information, the method may further include: determining that the information about the second reference object set has a change, and updating the information about the first reference object set based on the change of the information about the second reference object set, to update the first map information.

The following describes an example of an update process performed by the map information generation apparatus on the first map information.

It is assumed that a map element (for example, a speed limit sign is removed, or a left-turn waiting area is added at an intersection) in the map is updated, an identifier of the map element and a position of the map element may be obtained. A reference object associated with the map element is searched for in the information about the second reference object set. It is determined whether a type, a position, and other attribute information of the reference object have a change, and if the type, the position, and the other attribute information have a change, the information about the second reference object set is updated. An updating manner may be adding, deleting, or modifying related information of the reference object.

Further, when determining that the information about the second reference object set has a change, the map information generation apparatus searches for, based on a reference object that has a change in the information about the second reference object set, an associated reference object in the information about the first reference object set. It is determined whether the associated reference object needs to be updated. If the associated reference object needs to be updated, the information about the first reference object set is updated.

According to the foregoing process, the map information generation apparatus update the first map information in a timely manner.

Further, the map information generation apparatus may send updated first map information to the map information use apparatus, so that the map information use apparatus uses the updated first map information to perform relative position expression. This ensures accuracy of a position expression.

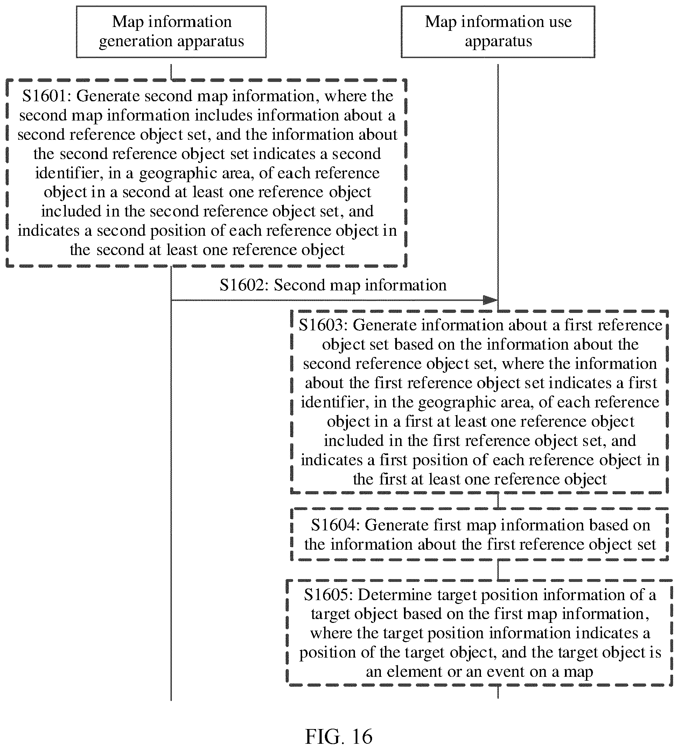

FIG. 16 is a schematic flowchart of another map information generation and use method according to an embodiment of this application. This embodiment is applicable to an application scenario in which a map information generation apparatus generates second map information, and sends the second map information to a map information use apparatus. The map information use apparatus generates first map information based on the second map information, and then uses the first map information to perform relative position expression. The map information generation apparatus and the map information use apparatus may be deployed in a same electronic device, or may be deployed in different electronic devices.

As shown in FIG. 16, the method in this embodiment includes the following steps.

S1601: The map information generation apparatus generates the second map information. The second map information includes information about a second reference object set, and the information about the second reference object set indicates a second identifier, in a geographic area, of each reference object in a second at least one reference object included in the second reference object set, and indicates a second position of each reference object in the second at least one reference object.

S1602: The map information generation apparatus sends the second map information to the map information use apparatus.

Correspondingly, the map information use apparatus receives the second map information.

S1603: The map information use apparatus generates information about a first reference object set based on the information about the second reference object set. The information about the first reference object set indicates a first identifier, in the geographic area, of each reference object in a first at least one reference object included in the first reference object set, and indicates a first position of each reference object in the first at least one reference object.

In a possible implementation, some reference objects are selected from the second at least one reference object as the first at least one reference object.

In a possible implementation, coordinate calculation is performed on at least some reference objects in the second at least one reference object based on a preset rule, to determine the first at least one reference object based on a result of the coordinate calculation.

In a possible implementation, the information about the first reference object set further indicates at least one of the following content: a position of each reference object in the first at least one reference object relative to each of the at least some reference objects, the preset rule, and the at least some reference objects.

S1604: The map information use apparatus generates the first map information. The first map information includes the information about the first reference object set.

In a possible implementation, the first map information further includes association indication information, and the association indication information indicates that the first map information is generated based on the second map information.

S1605: The map information use apparatus determines target position information of a target object based on the first map information. The target position information indicates a position of the target object, and the target object is an element or an event on a map.

For a specific implementation of this embodiment, refer to the detailed description of the embodiment shown in FIG. 14. Details are not described herein again.

Based on the embodiment shown in FIG. 16, in a possible implementation, after the map information generation apparatus generates the second map information, the method may further include: determining that a first map element has a change; and updating the information about the second reference object set based on the change of the first map element, to update the second map information.

The following describes an example of an update process performed by the map information generation apparatus on the second map information.

It is assumed that a map element (for example, a speed limit sign is removed, or a left-turn waiting area is added at an intersection) in the map is updated, an identifier of the map element and a position of the map element may be obtained. A reference object associated with the map element is searched for in the information about the second reference object set. It is determined whether a type, a position, and other attribute information of the reference object have a change, and if the type, the position, and the other attribute information have a change, the information about the second reference object set is updated. An updating manner may be adding, deleting, or modifying related information of the reference object.

According to the foregoing process, the map information generation apparatus update the second map information in a timely manner. Further, the map information generation apparatus may send updated second map information to the map information use apparatus. When determining that the information about the second reference object set has a change, the map information use apparatus updates the information about the first reference object set based on the change of the information about the second reference object set, to update the first map information. In this way, the updated first map information is used to perform relative position expression, to ensure accuracy of a position expression.

On the basis of any one of the foregoing embodiments, when the map information generation apparatus sends the first map information to the map information use apparatus, the first map information in packets may be sent.

In a possible implementation, the information about the first reference object set includes information about a third reference object set and information about a fourth reference object set. The information about the third reference object set indicates the first identifier, in the geographic area, of each reference object in a third at least one reference object and indicates the first position of each reference object in the third at least one reference object. The information about the fourth reference object set indicates the first identifier, in the geographic area, of each reference object in a fourth at least one reference object and indicates the first position of each reference object in the fourth at least one reference object. In this way, the first map information may be sent based on a plurality of data packets. The information about the third reference object set and the information about the fourth reference object set are carried in different data packets for sending.

Correspondingly, the map information use apparatus performs combination processing on the received plurality of data packets to obtain the first map information.

This implementation may be used in a scenario in which a quantity of reference objects in the first map information is large. The first map information is transferred in a manner of being sent in packets, so that air interface overheads can be reduced.

It should be understood that, when the map information generation apparatus sends the second map information to the map information use apparatus, the second map information in packets may be sent, and an implementation thereof is similar. Details are not described herein again.

The foregoing embodiments describe a process of generating the first map information and a process of performing relative position expression based on the first map information. The following describes the solutions of this application by using examples with reference to two specific application scenarios.

In a possible application scenario, a map is installed on an electronic device in a vehicle. In a driving process of the vehicle, position information of the target object may be displayed on the map. The target object may be an element or an event on the map. In this embodiment of this application, the electronic device may determine the target position information of the target object based on the first map information. The target position information indicates a position of the target object.

Specifically, the electronic device may perform relative position expression based on a plurality of reference objects in the first reference object set, to determine the target position information of the target object. For example, the first reference object set includes a second reference object and a third reference object. The electronic device may perform relative position expression on the target object based on the second reference object, to obtain second position information, and perform relative position expression on the target object based on the third reference object, to obtain third position information. In this way, the determined target position information of the target object includes the second position information and the third position information.

In an example, in a driving process of the vehicle, when determining that a distance between the third reference object and the vehicle is less than a distance between the second reference object and the vehicle, the electronic device replaces displaying the second position information with displaying the third position information.

In another example, in a driving process of the vehicle, when determining, based on the information about the first reference object set, that the third reference object is better than the second reference object, the electronic device replaces displaying the second position information with displaying the third position information.

For example, it is determined that the third reference object is better than the second reference object when the information about the first reference object set meets at least one of the following conditions.
(1) A priority of the third reference object is higher than a priority of the second reference object.
(2) Position precision of the third reference object is higher than position precision of the second reference object.
(3) Confidence of the third reference object is higher than confidence of the second reference object.
(4) A distance between the third reference object and the vehicle is less than a distance between the second reference object and the vehicle.

Optionally, in the foregoing two examples, before the replacing displaying the second position information with displaying the third position information, the method may further include: determining that a vehicle speed of the vehicle is less than a threshold. In other words, in a process in which the vehicle travels at a low speed, a reference object on which relative position expression is based may be switched. In a high-speed driving process of the vehicle, switching of a reference object is avoided as much as possible, or a frequency of switching a reference object is reduced, to ensure driving safety of the vehicle.

In another possible application scenario, a map is installed on an electronic device in a vehicle. In a driving process of the vehicle, assisted driving decision-making may be performed based on the position information of the target object. The target object may be an element or an event on the map. In this embodiment of this application, the electronic device may determine the target position information of the target object based on the first map information. The target position information indicates a position of the target object.

Specifically, the electronic device may perform relative position expression based on a plurality of reference objects in the first reference object set, to determine the target position information of the target object. For example, the first reference object set includes a second reference object and a third reference object. The electronic device may perform relative position expression on the target object based on the second reference object, to obtain second position information, and perform relative position expression on the target object based on the third reference object, to obtain third position information. In this way, the determined target position information of the target object includes the second position information and the third position information.

In an example, in a driving process of the vehicle, when determining that a distance between the third reference object and the vehicle is less than a distance between the second reference object and the vehicle, the electronic device replaces performing assisted driving decision-making based on the second position information with performing assisted driving decision-making based on the third position information.

In another example, in a driving process of the vehicle, when determining, based on the information about the first reference object set, that the third reference object is better than the second reference object, the electronic device replaces performing assisted driving decision-making based on the second position information with performing assisted driving decision-making based on the third position information.

For example, it is determined that the third reference object is better than the second reference object when the information about the first reference object set meets at least one of the following conditions:
(1) A priority of the third reference object is higher than a priority of the second reference object.
(2) Position precision of the third reference object is higher than position precision of the second reference object.
(3) Confidence of the third reference object is higher than confidence of the second reference object.
(4) A distance between the third reference object and the vehicle is less than a distance between the second reference object and the vehicle.

Optionally, in the foregoing two examples, before the replacing performing assisted driving decision-making based on the second position information with performing assisted driving decision-making based on the third position information, the method may further include: determining that a vehicle speed of the vehicle is less than a threshold. In other words, in a process in which the vehicle travels at a low speed, a reference object on which relative position expression is based may be switched. In a high-speed driving process of the vehicle, switching of a reference object is avoided as much as possible, or a frequency of switching a reference object is reduced, to ensure driving safety of the vehicle.

It should be noted that the foregoing descriptions of the two application scenarios are merely examples for description. In actual application, the map information generation method and the map information use method provided in this application may be applied to more scenarios, and implementation principles and technical effects thereof are similar. Examples are not described in embodiments of this application.

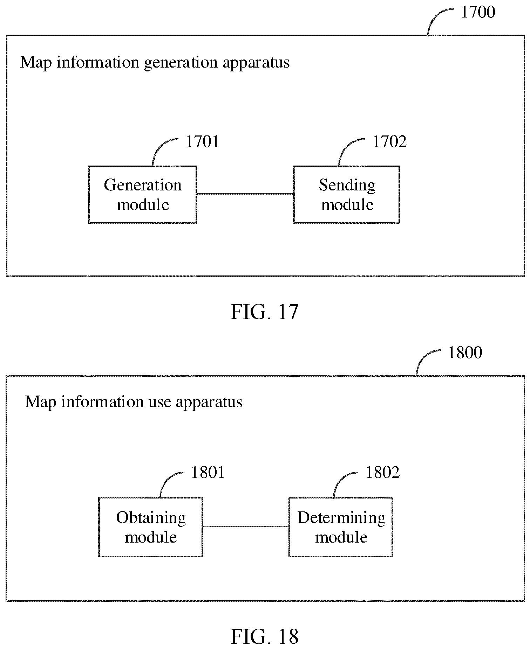

FIG. 17 is a schematic diagram of a structure of a map information generation apparatus according to an embodiment of this application. The map information generation apparatus provided in this embodiment may be a cloud device, a road side device, or a terminal device. The cloud device may be, for example, a map server, or a software module, a hardware module, or a chip in the map server. The road side device may be, for example, a road side unit, or a software module, a hardware module, or a chip in the road side unit. The terminal device is, for example, a vehicle, or a software module, a hardware module, or a chip in the vehicle.

As shown in FIG. 17, a map information generation apparatus 1700 provided in this embodiment includes a generation module 1701 and a sending module 1702. The generation module 1701 is configured to generate first map information. The first map information includes information about a first reference object set, and the information about the first reference object set indicates a first identifier, in a geographic area, of each reference object in a first at least one reference object included in the first reference object set, and indicates a first position of each reference object in the first at least one reference object.

The sending module 1702 is configured to send the first map information.

In a possible implementation, the information about the first reference object set further indicates at least one of the following content: current version information, previous version information, an update status of each reference object, a type of each reference object, a priority of each reference object, position precision of each reference object, confidence of each reference object, a map element associated with each reference object, and an identifier of the geographic area.

In a possible implementation, the generation module 1701 is specifically configured to: obtain second map information, where the second map information includes information about a second reference object set, and the information about the second reference object set indicates a second identifier, in the geographic area, of each reference object in a second at least one reference object included in the second reference object set, and indicates a second position of each reference object in the second at least one reference object; generate the information about the first reference object set based on the information about the second reference object set; and generate the first map information based on the information about the first reference object set.

In a possible implementation, the first map information further includes association indication information, and the association indication information indicates that the first map information is generated based on the second map information.

In a possible implementation, the generation module 1701 is specifically configured to select some reference objects from the second at least one reference object as the first at least one reference object.

In a possible implementation, the generation module 1701 is specifically configured to: perform coordinate calculation on at least some reference objects in the second at least one reference object based on a preset rule; and determine the first at least one reference object based on a result of the coordinate calculation.

In a possible implementation, the information about the first reference object set further indicates at least one of the following content: a position of each reference object in the first at least one reference object relative to each of the at least some reference objects; the preset rule; and the at least some reference objects.

In a possible implementation, the generation module 1701 is further configured to: determine that a first map element has a change, where the first map element is associated with the first reference object set; and update the information about the first reference object set based on the change of the first map element.

In a possible implementation, the generation module 1701 is further configured to: determine that the information about the second reference object set has a change; and update the information about the first reference object set based on the change of the information about the second reference object set.

In a possible implementation, the first map information further includes position information. The position information indicates a position of an element or an event on a map relative to at least some reference objects in the first at least one reference object.

In a possible implementation, the first at least one reference object includes a first reference object and a second reference object. The position information includes first position information and second position information. The first position information indicates a position of the element or event relative to the first reference object. The second position information indicates a position of the element or event relative to the second reference object.

In a possible implementation, the information about the first reference object set includes information about a third reference object set and information about a fourth reference object set. The information about the third reference object set indicates the first identifier, in the geographic area, of each reference object in a third at least one reference object and indicates the first position of each reference object in the third at least one reference object. The information about the fourth reference object set indicates the first identifier, in the geographic area, of each reference object in a fourth at least one reference object and indicates the first position of each reference object in the fourth at least one reference object. The sending module 1702 is specifically configured to: send the first map information based on a plurality of data packets. The information about the third reference object set and the information about the fourth reference object set are carried in different data packets for sending.

The map information generation apparatus provided in this embodiment may be configured to execute the map information generation method executed by the map information generation apparatus in the foregoing method embodiment. Implementation principles and technical effects thereof are similar, and details are not described herein again.

FIG. 18 is a schematic diagram of a structure of a map information use apparatus according to an embodiment of this application. The map information use apparatus provided in this embodiment may be a cloud device, a road side device, or a terminal device. The cloud device may be, for example, a map server, or a software module, a hardware module, or a chip in the map server. The road side device may be, for example, a road side unit, or a software module, a hardware module, or a chip in the road side unit. The terminal device is, for example, a vehicle, or a software module, a hardware module, or a chip in the vehicle.

As shown in FIG. 18, the map information use apparatus 1800 provided in this embodiment includes an obtaining module 1801 and a determining module 1802. The obtaining module 1801 is configured to obtain first map information. The first map information includes information about a first reference object set, and the information about the first reference object set indicates a first identifier, in a geographic area, of each reference object in a first at least one reference object included in the first reference object set, and indicates a first position of each reference object in the first at least one reference object.

The determining module 1802 is configured to determine target position information of a target object based on the first map information. The target position information indicates a position of the target object, and the target object is an element or an event on a map.

In a possible implementation, the information about the first reference object set further indicates at least one of the following content: current version information, previous version information, an update status of each reference object, a type of each reference object, a priority of each reference object, position precision of each reference object, confidence of each reference object, a map element associated with each reference object, and an identifier of the geographic area.

In a possible implementation, the obtaining module 1801 is further configured to: receive second map information. The second map information includes information about a second reference object set, and the information about the second reference object set indicates a second identifier, in the geographic area, of each reference object in a second at least one reference object included in the second reference object set, and indicates a second position of each reference object in the second at least one reference object. The obtaining module 1801 is specifically configured to: generate the information about the first reference object set based on the information about the second reference object set; and generate the first map information based on the information about the first reference object set.

In a possible implementation, the first map information further includes association indication information, and the association indication information indicates that the first map information is generated based on the second map information.

In a possible implementation, the obtaining module 1801 is specifically configured to select some reference objects from the second at least one reference object as the first at least one reference object.

In a possible implementation, the obtaining module 1801 is specifically configured to: perform coordinate calculation on at least some reference objects in the second at least one reference object based on a preset rule; and determine the first at least one reference object based on a result of the coordinate calculation.

In a possible implementation, the information about the first reference object set further indicates at least one of the following content: a position of each reference object in the first at least one reference object relative to each of the at least some reference objects; the preset rule; and the at least some reference objects.

In a possible implementation, the obtaining module 1801 is further configured to: determine that the information about the second reference object set has a change; and update the information about the first reference object set based on the change of the information about the second reference object set.

In a possible implementation, the determining module 1802 is specifically configured to: select a target reference object from the first at least one reference object; obtain initial position information that is of the target object and that is based on an initial reference object, where the initial reference object is different from the target reference object; and convert the initial position information into the target position information based on a position relationship between the target reference object and the initial reference object.

In a possible implementation, the first map information further includes position information. The position information indicates a position of the target object. The position information is based on a third at least one reference object included in the first reference object set. The information about the first reference object set includes information about a third reference object set. The information about the third reference object set indicates a third identifier, in the geographic area, of each reference object in the third at least one reference object, and indicates a third position of each reference object in the third at least one reference object. The determining module 1802 is specifically configured to: determine the target position information based on the position information and the information about the third reference object set.

In a possible implementation, when there are a plurality of pieces of position information, and there are a plurality of reference objects in the third at least one reference object, the determining module 1802 is specifically configured to: select a first reference object from the plurality of reference objects based on the third reference object information; and select first position information from the plurality of pieces of position information as the target position information, where the first position information corresponds to the first reference object.

In a possible implementation, the information about the first reference object set includes information about a fourth reference object set and information about a fifth reference object set. The information about the fourth reference object set indicates the first identifier, in the geographic area, of each reference object in a fourth at least one reference object and indicates the first position of each reference object in the fourth at least one reference object. The information about the fifth reference object set indicates the first identifier, in the geographic area, of each reference object in a fifth at least one reference object and indicates the first position of each reference object in the fifth at least one reference object, and the first at least one reference object includes the fourth at least one reference object and the fifth at least one reference object. The obtaining module 1801 is specifically configured to: obtain the first map information by receiving a plurality of data packets. The information about the fourth reference object set and the information about the fifth reference object set are carried in different data packets for sending.

In a possible implementation, the target object is an element or an event on a map. The target position information includes second position information and third position information. The first reference object set includes a second reference object and a third reference object. The second position information indicates a position of a vehicle relative to the second reference object, and the third position information indicates a position of the vehicle relative to the third reference object. The apparatus further includes a control module (not shown in the figure), configured to: determine that a distance between the third reference object and the vehicle is less than a distance between the second reference object and the vehicle; and replace displaying the second position information with displaying the third position information, or replace performing assisted driving decision-making based on the second position information with performing assisted driving decision-making based on the third position information.

In a possible implementation, the target object is an element or an event on a map. The target position information includes second position information and third position information. The first reference object set includes a second reference object and a third reference object. The second position information indicates a position of a vehicle relative to the second reference object, and the third position information indicates a position of the vehicle relative to the third reference object. The apparatus further includes: a control module (not shown in the figure), configured to: determine that the third reference object is better than the second reference object based on the information about the first reference object set; and replace displaying the second position information with displaying the third position information, or replace performing assisted driving decision-making based on the second position information with performing assisted driving decision-making based on the third position information.

In a possible implementation, the control module is further configured to: before the replacing, determine that a vehicle speed of the vehicle is less than a threshold.

The map information use apparatus provided in this embodiment may be configured to execute the map information use method executed by the map information use apparatus in the foregoing method embodiment. Implementation principles and technical effects thereof are similar, and details are not described herein again.

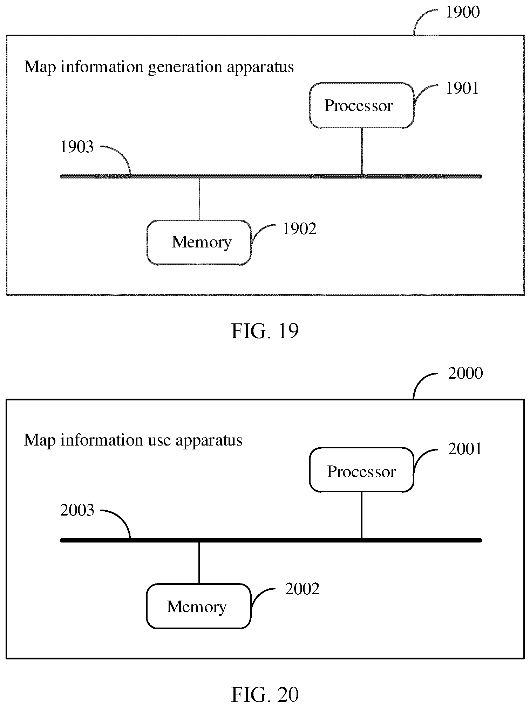

FIG. 19 is a schematic diagram of a structure of another map information generation apparatus according to an embodiment of this application. As shown in FIG. 19, a map information generation apparatus 1900 provided in this embodiment includes a processor 1901 and a memory 1902. The processor 1901 and the memory 1902 may communicate with each other. For example, the processor 1901 and the memory 1902 communicate with each other through a communication bus 1903, the memory 1902 stores a computer program, and the processor 1901 runs the computer program to execute the map information generation method shown in any one of the foregoing method embodiments. Implementation principles and technical effects thereof are similar, and details are not described herein again.

Optionally, the processor 1901 may implement the steps performed by the map information generation apparatus in the embodiments shown in FIG. 2, FIG. 14, and FIG. 16.

Optionally, the processor 1901 may perform functions of the modules (the generation module 1701 and the sending module 1702) in the embodiment shown in 17.

FIG. 20 is a schematic diagram of a structure of another map information use apparatus according to an embodiment of this application. As shown in FIG. 20, a map information use apparatus 2000 provided in this embodiment includes a processor 2001 and a memory 2002. The processor 2001 and the memory 2002 may communicate with each other. For example, the processor 2001 and the memory 2002 communicate with each other through a communication bus 2003, the memory 2002 stores a computer program, and the processor 2001 runs the computer program to execute the map information use method shown in any one of the foregoing method embodiments. Implementation principles and technical effects thereof are similar, and details are not described herein again.

Optionally, the processor 2001 may implement the steps performed by the map information use apparatus in the embodiments shown in FIG. 2, FIG. 14, and FIG. 16.

Optionally, the processor 2001 may perform functions of the modules (the obtaining module 1801 and the determining module 1802) in the embodiment shown in 18.

In the embodiments shown in FIG. 19 and FIG. 20, the processor may be a central processing unit (Central Processing Unit, CPU), or may be another general-purpose processor, a digital signal processor (Digital Signal Processor, DSP), an application-specific integrated circuit (Application-Specific Integrated Circuit, ASIC), or the like. The general-purpose processor may be a microprocessor, or the processor may be any conventional processor or the like. The steps of the methods disclosed with reference to this application may be directly implemented by a hardware processor, or may be implemented by a combination of hardware and a software module in a processor.

An embodiment of this application further provides a vehicle. The vehicle includes a map information use apparatus. The map information use apparatus may be the map information use apparatus shown in FIG. 18 or FIG. 20. Implementation principles and technical effects thereof are similar, and details are not described herein again.

An embodiment of this application further provides a map. The map includes first map information. The first map information includes information about a first reference object set, and the information about the first reference object set indicates a first identifier, in a geographic area, of each reference object in a first at least one reference object included in the first reference object set, and indicates a first position of each reference object in the first at least one reference object.

In a possible implementation, the information about the first reference object set further indicates at least one of the following content: current version information, previous version information, an update status of each reference object, a type of each reference object, a priority of each reference object, position precision of each reference object, confidence of each reference object, a map element associated with each reference object, and an identifier of the geographic area.

In a possible implementation, the first map information further includes position information. The position information indicates a position of an element or an event on a map relative to at least some reference objects in the first at least one reference object.

In a possible implementation, the first at least one reference object includes a first reference object and a second reference object. The position information includes first position information and second position information. The first position information indicates a position of the element or event relative to the first reference object. The second position information indicates a position of the element or event relative to the second reference object.

In this embodiment of this application, the first map information may be a part of a map data organization structure. In other words, the map may include the first map information. For example, the first map information may be used as a layer of the map.

An embodiment of this application further provides a system, including a map information generation apparatus and a map information use apparatus. The map information generation apparatus may be the map information generation apparatus provided in the embodiment shown in FIG. 17 or FIG. 19. The map information use apparatus may be the map information use apparatus provided in the embodiment shown in FIG. 18 or FIG. 20. Implementation principles and technical effects thereof are similar. Details are not described herein again.

An embodiment of this application further provides a computer-readable storage medium. The computer-readable storage medium stores a computer program. When the computer program is run, the map information generation method in any one of the foregoing method embodiments is implemented, or the map information use method in any one of the foregoing method embodiments is implemented. Implementation principles and technical effects thereof are similar. Details are not described herein again.

An embodiment of this application further provides a computer-readable storage medium. The computer-readable storage medium stores the map provided in the foregoing embodiment. Implementation principles and technical effects thereof are similar. Details are not described herein again.

An embodiment of this application further provides a computer program product. The computer program product includes a computer program. When the computer program is run, the map information generation method provided in any one of the foregoing method embodiments is implemented, or the map information use method provided in any one of the foregoing method embodiments is implemented. Implementation principles and technical effects thereof are similar. Details are not described herein again.

All or some of the steps of the foregoing method embodiments may be implemented by a program instructing related hardware. The foregoing program may be stored in a computer-readable memory. When the program is executed, the steps of the methods in embodiments are performed. The memory (storage medium) includes: a read-only memory (English: read-only memory, ROM for short), a RAM, a flash memory, a hard disk, a solid state disk, a magnetic tape (English: magnetic tape), a floppy disk (English: floppy disk), an optical disc (English: optical disc), and any combination thereof.

Embodiments of this application are described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processing unit of another programmable data processing device to generate a machine, so that the instructions executed by the computer or the processing unit of the another programmable data processing device generate an apparatus for implementing a specified function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

A plurality of embodiments described in this application may be arbitrarily combined, or steps may intersect with each other for execution. An execution sequence of the embodiments or an execution sequence of the steps of the embodiments is not fixed, and is not limited to that shown in the figure. The execution sequence of the embodiments and a cross execution sequence of the steps of the embodiments should be determined by using functions and internal logic of the embodiments and the steps.

Although this application is described with reference to specific features and embodiments thereof, it is clear that various modifications and combinations may be made to them without departing from the scope of this application. Correspondingly, the specification and accompanying drawings are merely example description of this application defined by the following claims, and are considered as any of or all modifications, variations, combinations or equivalents that cover the scope of this application. It is clearly that, a person skilled in the art can make various modifications and variations to this application without departing from the scope of this application. This application is intended to cover these modifications and variations of this application provided that they fall within the protection scope defined by the following claims and their equivalent technologies.

The objectives, technical solutions, and benefits of the present application are further described in detail in the foregoing specific implementations. It should be understood that the foregoing descriptions are merely specific implementations of the present application, but are not intended to limit the protection scope of the present application. Any modification, equivalent replacement, or improvement made within the spirit and principle of the present application shall fall within the protection scope of the present application.

## Claims

1. A map information generation method, comprising:
generating first map information, wherein the first map information comprises information about a first reference object set, and the information about the first reference object set indicates a first identifier, in a geographic area, of each reference object in a first at least one reference object comprised in the first reference object set, and indicates a first position of each reference object in the first at least one reference object; and
sending the first map information.

2. The method according to claim 1, wherein the information about the first reference object set further indicates at least one of the following content:
current version information;
previous version information;
an update status of each reference object;
a type of each reference object;
a priority of each reference object;
position precision of each reference object;
confidence of each reference object;
a map element associated with each reference object; and
an identifier of the geographic area.

3. The method according to claim 1 or 2, wherein the generating first map information comprises:
obtaining second map information, wherein the second map information comprises information about a second reference object set, and the information about the second reference object set indicates a second identifier, in the geographic area, of each reference object in a second at least one reference object comprised in the second reference object set, and indicates a second position of each reference object in the second at least one reference object;
generating the information about the first reference object set based on the information about the second reference object set; and
generating the first map information based on the information about the first reference object set.

4. The method according to claim 3, wherein the first map information further comprises association indication information, and the association indication information indicates that the first map information is generated based on the second map information.

5. The method according to claim 3 or 4, wherein the generating the information about the first reference object set based on the information about the second reference object set comprises:
selecting some reference objects from the second at least one reference object as the first at least one reference object.

6. The method according to claim 3 or 4, wherein the generating the information about the first reference object set based on the information about the second reference object set comprises:
performing coordinate calculation on at least some reference objects in the second at least one reference object based on a preset rule; and
determining the first at least one reference object based on a result of the coordinate calculation.

7. The method according to claim 6, wherein the information about the first reference object set further indicates at least one of the following content:
a position of each reference object in the first at least one reference object relative to each of the at least some reference objects;
the preset rule; and
the at least some reference objects.

8. The method according to any one of claims 3 to 7, wherein the method further comprises:
determining that the information about the second reference object set has a change; and
updating the information about the first reference object set based on the change of the information about the second reference object set.

9. The method according to any one of claims 1 to 8, wherein the method further comprises:
determining that a first map element has a change, wherein the first map element is associated with the first reference object set; and
updating the information about the first reference object set based on the change of the first map element.

10. The method according to any one of claims 1 to 9, wherein the first map information further comprises position information, and the position information indicates a position of an element or an event on a map relative to at least some reference objects in the first at least one reference object.

11. The method according to claim 10, wherein the first at least one reference object comprises a first reference object and a second reference object, the position information comprises first position information and second position information, the first position information indicates a position of the element or event relative to the first reference object, and the second position information indicates a position of the element or event relative to the second reference object.

12. The method according to any one of claims 1 to 11, wherein the information about the first reference object set comprises information about a third reference object set and information about a fourth reference object set, the information about the third reference object set indicates the first identifier, in the geographic area, of each reference object in a third at least one reference object and indicates the first position of each reference object in the third at least one reference object, the information about the fourth reference object set indicates the first identifier, in the geographic area, of each reference object in a fourth at least one reference object and indicates the first position of each reference object in the fourth at least one reference object, and the first at least one reference object comprises the third at least one reference object and the fourth at least one reference object; and
the sending the first map information comprises:
sending the first map information based on a plurality of data packets, wherein the information about the third reference object set and the information about the fourth reference object set are carried in different data packets for sending.

13. A map information use method, comprising:
obtaining first map information, wherein the first map information comprises information about a first reference object set, and the information about the first reference object set indicates a first identifier, in a geographic area, of each reference object in a first at least one reference object comprised in the first reference object set, and indicates a first position of each reference object in the first at least one reference object; and
determining target position information of a target object based on the first map information, wherein the target position information indicates a position of the target object, and the target object is an element or an event on a map.

14. The method according to claim 13, wherein the information about the first reference object set further indicates at least one of the following content:
current version information;
previous version information;
an update status of each reference object;
a type of each reference object;
a priority of each reference object;
position precision of each reference object;
confidence of each reference object;
a map element associated with each reference object; and
an identifier of the geographic area.

15. The method according to claim 13 or 14, wherein the method further comprises:
receiving second map information, wherein the second map information comprises information about a second reference object set, and the information about the second reference object set indicates a second identifier, in the geographic area, of each reference object in a second at least one reference object comprised in the second reference object set, and indicates a second position of each reference object in the second at least one reference object; and
the obtaining first map information comprises:
generating the information about the first reference object set based on the information about the second reference object set; and
generating the first map information based on the information about the first reference object set.

16. The method according to claim 15, wherein the first map information further comprises association indication information, and the association indication information indicates that the first map information is generated based on the second map information.

17. The method according to claim 15 or 16, wherein the generating the information about the first reference object set based on the information about the second reference object set comprises:
selecting some reference objects from the second at least one reference object as the first at least one reference object.

18. The method according to claim 15 or 16, wherein the generating the information about the first reference object set based on the information about the second reference object set comprises:
performing coordinate calculation on at least some reference objects in the second at least one reference object based on a preset rule; and
determining the first at least one reference object based on a result of the coordinate calculation.

19. The method according to claim 18, wherein the information about the first reference object set further indicates at least one of the following content:
a position of each reference object in the first at least one reference object relative to each of the at least some reference objects;
the preset rule; and
the at least some reference objects.

20. The method according to any one of claims 15 to 19, wherein the method further comprises:
determining that the information about the second reference object set has a change; and
updating the information about the first reference object set based on the change of the information about the second reference object set.

21. The method according to any one of claims 13 to 20, wherein the determining target position information of a target object based on the first map information comprises:
selecting a target reference object from the first at least one reference object;
obtaining initial position information that is of the target object and that is based on an initial reference object, wherein the initial reference object is different from the target reference object; and
converting the initial position information into the target position information based on a position relationship between the target reference object and the initial reference object.

22. The method according to any one of claims 13 to 20, wherein the first map information further comprises position information, the position information indicates a position of the target object, the position information is based on a third at least one reference object comprised in the first reference object set, the information about the first reference object set comprises information about a third reference object set, and the information about the third reference object set indicates a third identifier, in the geographic area, of each reference object in the third at least one reference object, and indicates a third position of each reference object in the third at least one reference object; and the determining target position information of a target object based on the first map information comprises:
determining the target position information based on the position information and the information about the third reference object set.

23. The method according to claim 22, wherein when there are a plurality of pieces of position information, and there are a plurality of reference objects in the third at least one reference object, the determining the target position information based on the position information and the information about the third reference object set comprises:
selecting a first reference object from the plurality of reference objects based on the third reference object information; and
selecting first position information from the plurality of pieces of position information as the target position information, wherein the first position information corresponds to the first reference object.

24. The method according to any one of claims 13 to 23, wherein the information about the first reference object set comprises information about a fourth reference object set and information about a fifth reference object set, the information about the fourth reference object set indicates the first identifier, in the geographic area, of each reference object in a fourth at least one reference object and indicates the first position of each reference object in the fourth at least one reference object, the information about the fifth reference object set indicates the first identifier, in the geographic area, of each reference object in a fifth at least one reference object and indicates the first position of each reference object in the fifth at least one reference object, and the first at least one reference object comprises the fourth at least one reference object and the fifth at least one reference object; and
the obtaining first map information comprises:
obtaining the first map information by receiving a plurality of data packets, wherein the information about the fourth reference object set and the information about the fifth reference object set are carried in different data packets for sending.

25. The method according to any one of claims 13 to 24, wherein the target object is an element or an event on a map, the target position information comprises second position information and third position information, the first reference object set comprises a second reference object and a third reference object, the second position information indicates a position of a vehicle relative to the second reference object, and the third position information indicates a position of the vehicle relative to the third reference object; and the method further comprises:
determining that a distance between the third reference object and the vehicle is less than a distance between the second reference object and the vehicle; and
replacing displaying the second position information with displaying the third position information, or replacing performing assisted driving decision-making based on the second position information with performing assisted driving decision-making based on the third position information.

26. The method according to any one of claims 13 to 24, wherein the target object is an element or an event on a map, the target position information comprises second position information and third position information, the first reference object set comprises a second reference object and a third reference object, the second position information indicates a position of a vehicle relative to the second reference object, and the third position information indicates a position of the vehicle relative to the third reference object; and the method further comprises:
determining that the third reference object is better than the second reference object based on the information about the first reference object set; and
replacing displaying the second position information with displaying the third position information, or replacing performing assisted driving decision-making based on the second position information with performing assisted driving decision-making based on the third position information.

27. The method according to claim 26, wherein the determining that the third reference object is better than the second reference object based on the information about the first reference object set comprises:
determining that the third reference object is better than the second reference object when the information about the first reference object set meets at least one of the following conditions:
a priority of the third reference object is higher than a priority of the second reference object;
position precision of the third reference object is higher than position precision of the second reference object;
confidence of the third reference object is higher than confidence of the second reference object; and
a distance between the third reference object and the vehicle is less than a distance between the second reference object and the vehicle.

28. The method according to any one of claims 25 to 27, wherein before the replacing, the method further comprises:
determining that a vehicle speed of the vehicle is less than a threshold.

29. A map information generation apparatus, comprising a processor and a memory, wherein the memory stores a computer program, and the processor runs the computer program to implement the method according to any one of claims 1 to 12.

30. A map information use apparatus, comprising a processor and a memory, wherein the memory stores a computer program, and the processor runs the computer program to implement the method according to any one of claims 13 to 28.

31. A map information generation apparatus, comprising:
a generation module, configured to generate first map information, wherein the first map information comprises information about a first reference object set, and the information about the first reference object set indicates a first identifier, in a geographic area, of each reference object in a first at least one reference object comprised in the first reference object set, and indicates a first position of each reference object in the first at least one reference object; and
a sending module, configured to send the first map information.

32. The apparatus according to claim 31, wherein the information about the first reference object set further indicates at least one of the following content:
current version information;
previous version information;
an update status of each reference object;
a type of each reference object;
a priority of each reference object;
position precision of each reference object;
confidence of each reference object;
a map element associated with each reference object; and
an identifier of the geographic area.

33. The apparatus according to claim 31 or 32, wherein the generation module is specifically configured to:
obtain second map information, wherein the second map information comprises information about a second reference object set, and the information about the second reference object set indicates a second identifier, in the geographic area, of each reference object in a second at least one reference object comprised in the second reference object set, and indicates a second position of each reference object in the second at least one reference object;
generate the information about the first reference object set based on the information about the second reference object set; and
generate the first map information based on the information about the first reference object set.

34. The apparatus according to claim 33, wherein the first map information further comprises association indication information, and the association indication information indicates that the first map information is generated based on the second map information.

35. The apparatus according to claim 33 or 34, wherein the generation module is specifically configured to select some reference objects from the second at least one reference object as the first at least one reference object.

36. The apparatus according to claim 33 or 34, wherein the generation module is specifically configured to:
perform coordinate calculation on at least some reference objects in the second at least one reference object based on a preset rule; and
determine the first at least one reference object based on a result of the coordinate calculation.

37. The apparatus according to claim 36, wherein the information about the first reference object set further indicates at least one of the following content:
a position of each reference object in the first at least one reference object relative to each of the at least some reference objects;
the preset rule; and
the at least some reference objects.

38. The apparatus according to any one of claims 33 to 37, wherein the generation module is further configured to:
determine that the information about the second reference object set has a change; and
update the information about the first reference object set based on the change of the information about the second reference object set.

39. The apparatus according to any one of claims 31 to 38, wherein the generation module is further configured to:
determine that a first map element has a change, wherein the first map element is associated with the first reference object set; and
update the information about the first reference object set based on the change of the first map element.

40. The apparatus according to any one of claims 31 to 39, wherein the first map information further comprises position information, and the position information indicates a position of an element or an event on a map relative to at least some reference objects in the first at least one reference object.

41. The apparatus according to claim 40, wherein the first at least one reference object comprises a first reference object and a second reference object, the position information comprises first position information and second position information, the first position information indicates a position of the element or event relative to the first reference object, and the second position information indicates a position of the element or event relative to the second reference object.

42. The apparatus according to any one of claims 31 to 41, wherein the information about the first reference object set comprises information about a third reference object set and information about a fourth reference object set, the information about the third reference object set indicates the first identifier, in the geographic area, of each reference object in a third at least one reference object and indicates the first position of each reference object in the third at least one reference object, the information about the fourth reference object set indicates the first identifier, in the geographic area, of each reference object in a fourth at least one reference object and indicates the first position of each reference object in the fourth at least one reference object, and the first at least one reference object comprises the third at least one reference object and the fourth at least one reference object; and
the sending module is specifically configured to:
send the first map information based on a plurality of data packets, wherein the information about the third reference object set and the information about the fourth reference object set are carried in different data packets for sending.

43. A map information use apparatus, comprising:
an obtaining module, configured to obtain first map information, wherein the first map information comprises information about a first reference object set, and the information about the first reference object set indicates a first identifier, in a geographic area, of each reference object in a first at least one reference object comprised in the first reference object set, and indicates a first position of each reference object in the first at least one reference object; and
a determining module, configured to determine target position information of a target object based on the first map information, wherein the target position information indicates a position of the target object, and the target object is an element or an event on a map.

44. The apparatus according to claim 43, wherein the information about the first reference object set further indicates at least one of the following content:
current version information;
previous version information;
an update status of each reference object;
a type of each reference object;
a priority of each reference object;
position precision of each reference object;
confidence of each reference object;
a map element associated with each reference object; and
an identifier of the geographic area.

45. The apparatus according to claim 43 or 44, further comprising:
a receiving module, configured to receive second map information, wherein the second map information comprises information about a second reference object set, and the information about the second reference object set indicates a second identifier, in the geographic area, of each reference object in a second at least one reference object comprised in the second reference object set, and indicates a second position of each reference object in the second at least one reference object, wherein
the obtaining module is specifically configured to: generate the information about the first reference object set based on the information about the second reference object set; and generate the first map information based on the information about the first reference object set.

46. The apparatus according to claim 45, wherein the first map information further comprises association indication information, and the association indication information indicates that the first map information is generated based on the second map information.

47. The apparatus according to claim 45 or 46, wherein the obtaining module is specifically configured to select some reference objects from the second at least one reference object as the first at least one reference object.

48. The apparatus according to claim 45 or 46, wherein the obtaining module is specifically configured to:
perform coordinate calculation on at least some reference objects in the second at least one reference object based on a preset rule; and
determine the first at least one reference object based on a result of the coordinate calculation.

49. The apparatus according to claim 48, wherein the information about the first reference object set further indicates at least one of the following content:
a position of each reference object in the first at least one reference object relative to each of the at least some reference objects;
the preset rule; and
the at least some reference objects.

50. The apparatus according to any one of claims 45 to 49, further comprising:
a first updating module, configured to: determine that the information about the second reference object set has a change; and update the information about the first reference object set based on the change of the second reference object set.

51. The apparatus according to any one of claims 43 to 50, wherein the determining module is specifically configured to:
select a target reference object from the first at least one reference object;
obtain initial position information that is of the target object and that is based on an initial reference object, wherein the initial reference object is different from the target reference object; and
convert the initial position information into the target position information based on a position relationship between the target reference object and the initial reference object.

52. The apparatus according to any one of claims 43 to 50, wherein the first map information further comprises position information, the position information indicates a position of the target object, the position information is based on a third at least one reference object comprised in the first reference object set, the information about the first reference object set comprises information about a third reference object set, and the information about the third reference object set indicates a third identifier, in the geographic area, of each reference object in the third at least one reference object, and indicates a third position of each reference object in the third at least one reference object; and the determining module is specifically configured to:
determine the target position information based on the position information and the information about the third reference object set.

53. The apparatus according to claim 52, wherein when there are a plurality of pieces of position information, and there are a plurality of reference objects in the third at least one reference object, the determining module is specifically configured to:
select a first reference object from the plurality of reference objects based on the third reference object information; and
select first position information from the plurality of pieces of position information as the target position information, wherein the first position information corresponds to the first reference object.

54. The apparatus according to any one of claims 43 to 53, wherein the information about the first reference object set comprises information about a fourth reference object set and information about a fifth reference object set, the information about the fourth reference object set indicates the first identifier, in the geographic area, of each reference object in a fourth at least one reference object and indicates the first position of each reference object in the fourth at least one reference object, the information about the fifth reference object set indicates the first identifier, in the geographic area, of each reference object in a fifth at least one reference object and indicates the first position of each reference object in the fifth at least one reference object, and the first at least one reference object comprises the fourth at least one reference object and the fifth at least one reference object; and
the obtaining module is specifically configured to obtain the first map information by receiving a plurality of data packets, wherein the information about the fourth reference object set and the information about the fifth reference object set are carried in different data packets for sending.

55. The apparatus according to any one of claims 43 to 54, wherein the target object is an element or an event on a map, the target position information comprises second position information and third position information, the first reference object set comprises a second reference object and a third reference object, the second position information indicates a position of a vehicle relative to the second reference object, and the third position information indicates a position of the vehicle relative to the third reference object; and the apparatus further comprises:
a control module, configured to: determine that a distance between the third reference object and the vehicle is less than a distance between the second reference object and the vehicle; and replace displaying the second position information with displaying the third position information, or replace performing assisted driving decision-making based on the second position information with performing assisted driving decision-making based on the third position information.

56. The apparatus according to any one of claims 43 to 54, wherein the target object is an element or an event on a map, the target position information comprises second position information and third position information, the first reference object set comprises a second reference object and a third reference object, the second position information indicates a position of a vehicle relative to the second reference object, and the third position information indicates a position of the vehicle relative to the third reference object; and the apparatus further comprises:
a control module, configured to: determine, based on the information about the first reference object set, that the third reference object is better than the second reference object; and replace displaying the second position information with displaying the third position information, or replace performing assisted driving decision-making based on the second position information with performing assisted driving decision-making based on the third position information.

57. The apparatus according to claim 56, wherein the control module is specifically configured to:
determine that the third reference object is better than the second reference object when the information about the first reference object set meets at least one of the following conditions:
a priority of the third reference object is higher than a priority of the second reference object;
position precision of the third reference object is higher than position precision of the second reference object;
confidence of the third reference object is higher than confidence of the second reference object; and
a distance between the third reference object and the vehicle is less than a distance between the second reference object and the vehicle.

58. The apparatus according to any one of claims 55 to 57, wherein the control module is further configured to determine that a vehicle speed of the vehicle is less than a threshold.

59. A vehicle, comprising the map information use apparatus according to any one of claims 30, and 43 to 58.

60. A system, comprising a map information generation apparatus and a map information use apparatus, wherein the map information generation apparatus is configured to perform the method according to any one of claims 1 to 12, and the map information use apparatus is configured to perform the method according to any one of claims 13 to 28.

61. A map, comprising first map information, wherein the first map information comprises information about a first reference object set, and the information about the first reference object set indicates a first identifier, in a geographic area, of each reference object in a first at least one reference object comprised in the first reference object set, and indicates a first position of each reference object in the first at least one reference object.

62. The map according to claim 61, wherein the information about the first reference object set further indicates at least one of the following content:
current version information;
previous version information;
an update status of each reference object;
a type of each reference object;
a priority of each reference object;
position precision of each reference object;
confidence of each reference object;
a map element associated with each reference object; and
an identifier of the geographic area.

63. The map according to claim 61 or 62, wherein the first map information further comprises position information, and the position information indicates a position of an element or an event on a map relative to at least some reference objects in the first at least one reference object.

64. The map according to claim 63, wherein the first at least one reference object comprises a first reference object and a second reference object, the position information comprises first position information and second position information, the first position information indicates a position of the element or event relative to the first reference object, and the second position information indicates a position of the element or event relative to the second reference object.

65. A computer-readable storage medium, wherein the computer-readable storage medium stores a computer program, and when the computer program is run, the method according to any one of claims 1 to 12 is implemented, or the method according to any one of claims 13 to 28 is implemented.

66. A computer-readable storage medium, wherein the computer-readable storage medium stores the map according to any one of claims 61 to 64.

67. A computer program product, wherein the computer program product comprises a computer program, and when the computer program is run, the method according to any one of claims 1 to 12 is implemented, or the method according to any one of claims 13 to 28 is implemented.
